# EUROPEAN PATENT APPLICATION

(11) **EP 4 216 650 A1**
(43) Date of publication of application: **26.07.2023**
(21) Application number: 21869236.6
(22) Date of filing: 07.09.2021
(51) Int. Cl.: H04W 76/10, H04W 28/18

(54) **COMMUNICATION DEVICE AND COMMUNICATION METHOD**

(30) Priority: 18.09.2020 JP 2020157022
(71) Applicant: Sony Group Corporation, Minato-Ku, Tokyo, 108-0075 (JP)
(72) Inventor: MATSUDA, Hiroki, Tokyo 108-0075 (JP); TSUDA, Shinichiro, Tokyo 108-0075 (JP)
(74) Representative: Witte, Weller & Partner Patentanwälte mbB
(86) International application number: PCT/JP2021/032752
(87) International publication number: WO 2022/059549

(57) **Abstract**

A communication device includes a determination unit that non-statically determines a signal processing scheme selected from a plurality of signal processing schemes having different signal processing block configurations as a signal processing scheme in communication using a predetermined channel; and a communication control unit that controls communication in the predetermined channel based on the determined signal processing scheme.

## Description

### Field

The present disclosure relates to a communication device and a communication method.

### Background

With the progress of communication technology, communication performance is greatly improved, such as a large capacity, a low delay, and high reliability. For example, in a next generation radio access technology (RAT) such as the New Radio (NR), communication performance is further improved from conventional Long Term Evolution (LTE) by adopting an improved signal processing scheme such as supporting a plurality of different subcarrier intervals, for example.

### Citation List

### Non Patent Literature

Non Patent Literature 1: 3GPP TS 38.202 v16.0.0 Services provided by the physical layer

### Summary

### Technical Problem

In recent years, further improvement in communication performance (for example, further increase in capacity, increase in speed, decrease in delay, increase in reliability, decrease in power consumption, or decrease in processing load) is desired. However, high communication performance is not necessarily achieved simply by replacing various schemes related to communication such as a signal processing scheme with a new scheme.

Therefore, the present disclosure proposes a communication device and a communication method capable of realizing high communication performance.

Note that the above object is merely one of objects that can be solved or achieved by the plurality of embodiments disclosed in the present specification.

### Solution to Problem

In order to solve the above problem, a communication device according to one embodiment of the present disclosure includes: a determination unit that non-statically determines a signal processing scheme selected from a plurality of signal processing schemes having different signal processing block configurations as a signal processing scheme in communication using a predetermined channel; and a communication control unit that controls communication in the predetermined channel based on the determined signal processing scheme.

### Brief Description of Drawings

FIG. 1 is a diagram illustrating an example of a transmission/reception signal processing block configuration in 5G NR.
FIG. 2 is a diagram illustrating a configuration example of a communication system according to an embodiment of the present disclosure.
FIG. 3 is a diagram illustrating a configuration example of a management device according to an embodiment of the present disclosure.
FIG. 4 is a diagram illustrating a configuration example of a base station according to an embodiment of the present disclosure.
FIG. 5 is a diagram illustrating a configuration example of a relay station according to an embodiment of the present disclosure.
FIG. 6 is a diagram illustrating a configuration example of a terminal device according to an embodiment of the present disclosure.
FIG. 7 is a diagram illustrating an example of 5G architecture.
FIG. 8 is a sequence diagram illustrating an example of a registration procedure.
FIG. 9 is a flowchart illustrating an example of an initial connection process.
FIG. 10 is a diagram illustrating a contention-based random access procedure.
FIG. 11 is a diagram illustrating a non-contention-based random access procedure.
FIG. 12 is a diagram illustrating a 2-step random access procedure.
FIG. 13A is a sequence example of a signal process switching procedure of the present embodiment.
FIG. 13B is a sequence example of a signal process switching procedure of the present embodiment.
FIG. 14 is a diagram illustrating an example of a signal processing scheme.
FIG. 15 is a diagram illustrating another example of a signal processing scheme.
FIG. 16 is a diagram illustrating another example of a signal processing scheme.
FIG. 17 is a diagram illustrating another example of a signal processing scheme.
FIG. 18 is a diagram illustrating another example of a signal processing scheme.

### Description of Embodiments

Hereinafter, the embodiments of the present disclosure will be described in detail with reference to the drawings. In the following embodiments, the same parts are denoted by the same reference signs, and a duplicate description will be omitted.

Further, in the present specification and drawings, a plurality of components having substantially the same function configurations may be distinguished by adding different numbers after the same reference numerals. For example, a plurality of configurations having substantially the same function configuration is distinguished as terminal devices 40₁, 40₂, and 40₃ as necessary. However, when it is not necessary to distinguish each of the plurality of components having substantially the same function configurations, only the same reference signs are given. For example, in a case where it is not necessary to particularly distinguish the terminal devices 40₁, 40₂, and 40₃, they are simply referred to as a terminal device 40.

One or more embodiments (examples and modifications) described below can each be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

Further, the present disclosure will be described in the order of the following items.
1. Overview
2. Configuration of communication system
2-1. Overall configuration of communication system
2-2. Configuration of management device
2-3. Configuration of base station
2-4. Configuration of relay station
2-5. Configuration of terminal device
3. Network architecture
3-1. Configuration example of network architecture
3-2. Registration procedure
4. Basic operation of communication system
4-1. Initial connection process
4-2. Random access procedure
5. Signal process of the present embodiment
5-1. Overview of processing
5-2. Sequence example
5-3. Signal processing scheme
5-4. Arithmetic model
5-5. Details of signal process of the present embodiment
5-6. Application example
6. Modifications
7. Conclusion

### <<1. Overview»

The radio access technology (RAT) such as Long Term Evolution (LTE) and New Radio (NR) has been studied in the third generation partnership project (3GPP). The LTE and the NR each are a type of cellular communication technology, and enable mobile communication of a terminal device by disposing a plurality of areas covered by a base station in a cell shape. At this time, a single base station may manage a plurality of cells.

In the following explanation, the "LTE" includes an LTE-Advanced (LTE-A), an LTE-Advanced Pro (LTE-A Pro), and an evolved universal terrestrial radio access (EUTRA). In addition, the NR includes a New Radio access technology (NRAT) and a further EUTRA (FEUTRA). A single base station may manage a plurality of cells. In the following description, a cell supporting LTE is referred to as an LTE cell, and a cell supporting NR is referred to as an NR cell.

The NR is the next generation (fifth generation) of LTE radio access technology (RAT). The NR is a radio access technology that can support various use cases including an enhanced mobile broadband (eMBB), massive machine type communications (mMTC), and ultra-reliable and low latency communications (URLLC). The NR is being studied aiming at a technical framework that supports a usage scenarios, requirements, and deployment scenarios in these use cases.

High communication performance is expected in the next generation communication technology. For example, in the next-generation communication technology, further increase in capacity, increase in speed, decrease in delay, increase in reliability, decrease in power consumption, or decrease in processing load is desired. In order to realize high communication performance, it is conceivable to change a scheme related to communication to a new scheme. However, merely replacing the conventional communication scheme with a new scheme, such as replacing the conventional signal processing scheme with a new signal processing scheme, does not necessarily achieve high communication performance.

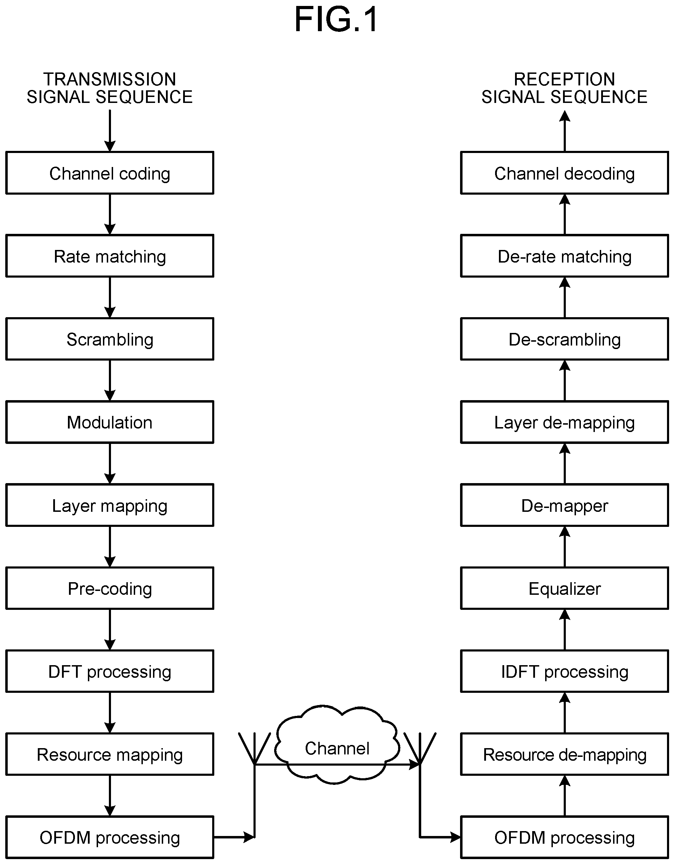

For example, in the related art, a signal processing scheme of a predetermined block configuration (function configuration) according to a channel is determined in advance. FIG. 1 is a diagram illustrating an example of a transmission/reception signal processing block configuration in 5G NR. In 5G NR, for example, a predetermined signal processing block as illustrated in FIG. 1 is used, and the block configuration (also referred to as a function configuration) of the signal processing scheme does not change. However, in part of the signal processing scheme, it is possible to perform a process of passing the signal processing block as it is. For example, when the transform precoding block is disabled, the input signal is used as it is as the output signal. The terminal device receives the communication parameter applied to the signal processing block from the base station. The base station and the terminal device perform signal processes according to the communication parameter.

In order to realize high communication performance, it is assumed that this signal processing scheme is replaced with a signal processing scheme having a new block configuration. However, even when a signal processing scheme having a new block configuration is used, the signal processing scheme is not necessarily optimal in various cases (for example, various communication environments, various use cases, or combinations of various communication equipment).

Therefore, in the present embodiment, this problem is solved by the following means.

The communication device (for example, a base station and a terminal device) according to the present embodiment does not determine a signal processing scheme used for communication as one signal processing scheme in advance, but changes the signal processing scheme to an optimal signal processing scheme according to the situation. Note that, in the present embodiment, a plurality of signal processing schemes refers to a plurality of signal processing schemes having different signal processing block configurations. For example, it is assumed that there is a signal processing scheme in which a communication parameter can be set. In this case, the signal processing schemes before and after the communication parameter is changed are signal processing schemes having the same signal processing block configuration. In addition, it is assumed that there is a signal processing scheme in which some signal processing blocks can be set to be disabled. In this case, the signal processing schemes before and after the signal processing block is disabled are signal processing schemes having the same signal processing block configuration. In the present embodiment, the signal processing block configuration can be rephrased as a signal processing function configuration.

The communication device according to the present embodiment non-statically determines a signal processing scheme selected from a plurality of signal processing schemes as a signal processing scheme in communication using a predetermined channel. Non-static means dynamic or quasi-static. For example, the base station dynamically or quasi-statically determines a signal processing scheme selected from a plurality of signal processing schemes having different signal processing block configurations as a signal processing scheme in communication using a predetermined channel. At this time, the base station may determine a signal processing scheme used for communication with the terminal device based on the reference signal transmitted by the terminal device. Note that the base station may notify the terminal device of the determined signal processing scheme. The terminal device may determine the signal processing scheme based on the information received from the base station. Then, the communication device (for example, a base station and a terminal device) controls communication in a predetermined channel based on the determined signal processing scheme.

As a result, an optimum signal processing scheme according to the situation is used for communication. For example, the communication device according to the present embodiment can use an optimal signal processing scheme that is cell-specific, beam-specific, or terminal-specific for communication. As a result, the communication device can achieve high communication performance. Depending on the signal processing scheme to be selected, load reduction to the network can also be expected.

Although the outline of the present embodiment is described above, the communication system according to the present embodiment will be described in detail below.

### <<2. Configuration of communication system>>

Hereinafter, a configuration of a communication system 1 will be specifically described with reference to the drawings.

### <2-1. Overall configuration of communication system>

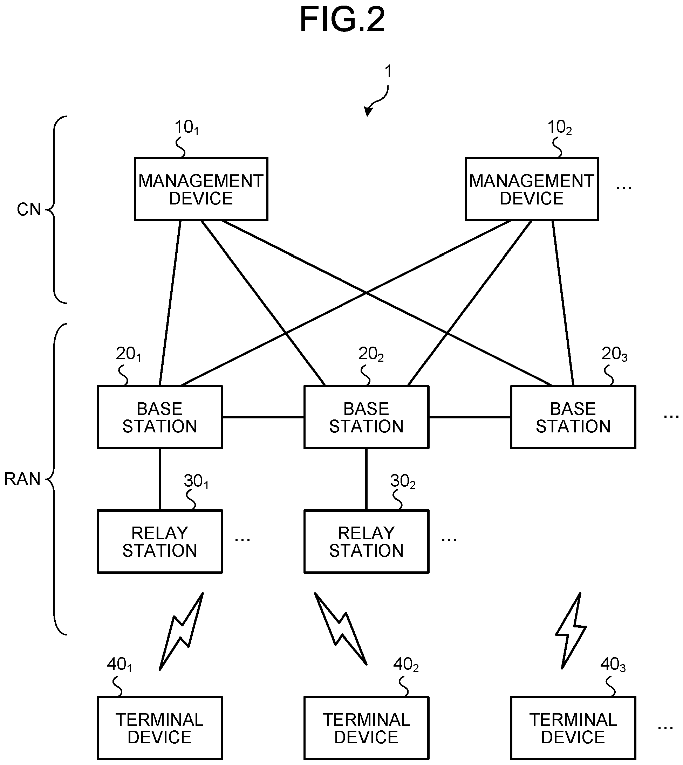

FIG. 2 is a diagram illustrating a configuration example of a communication system 1 according to an embodiment of the present disclosure. The communication system 1 includes a management device 10, a base station 20, a relay station 30, and a terminal device 40. The communication system 1 provides the user with a radio network capable of mobile communication by the radio communication devices constituting the communication system 1 operating in cooperation. The radio network of the present embodiment includes, for example, a radio access network and a core network. Note that, in the present embodiment, the radio communication device is a device having a function of radio communication, and corresponds to the base station 20, the relay station 30, and the terminal device 40 in the example of FIG. 2.

The communication system 1 may include a plurality of management devices 10, a plurality of base stations 20, a plurality of relay stations 30, and a plurality of terminal devices 40. In the example of FIG. 2, the communication system 1 includes management devices 10₁ and 10₂ and the like as the management device 10, and includes base stations 20₁ and 20₂ and the like as the base station 20. In addition, the communication system 1 includes relay stations 30₁ and 30₂ and the like as the relay station 30, and includes terminal devices 40₁, 40₂, and 40₃ and the like as the terminal device 40.

The device in the figure may be considered as a device in a logical sense. In other words, some of the devices in the figure are realized by a virtual machine (VM), a container, a docker, and the like, and they may be implemented on the physically identical hardware.

Note that the communication system 1 may support a radio access technology (RAT) such as Long Term Evolution (LTE) or New Radio (NR). The LTE and the NR each are a type of cellular communication technology, and enable mobile communication of a terminal device by disposing a plurality of areas covered by a base station in a cell shape.

Note that the radio access method used by the communication system 1 is not limited to LTE and NR, but may be another radio access scheme such as a Wideband Code Division Multiple Access (W-CDMA) or a Code Division Multiple Access 2000 (cdma 2000).

Furthermore, the base station or the relay station constituting the communication system 1 may be a ground station or a non-ground station. The non-ground station may be a satellite station or an aircraft station. When the non-ground station is a satellite station, the communication system 1 may be a bent-pipe (transparent) type mobile satellite communication system.

In the present embodiment, the ground station (also referred to as a ground base station) refers to a base station (including a relay station) installed on the ground. Here, the "ground" is a ground in a broad sense including not only land but also underground, on water, and underwater. Note that, in the following description, the description of the "ground station" may be replaced with a "gateway".

The LTE base station may be referred to as an evolved node B (eNodeB) or an eNB. Also, the NR base station may be referred to as a gNodeB or a gNB. In LTE and NR, a terminal device (also referred to as a mobile station or a terminal) may be referred to as user equipment (UE). Note that the terminal device is a type of communication device, and is also referred to as a mobile station or a terminal.

In the present embodiment, the concept of the communication device includes not only a portable mobile device (terminal device) such as a mobile terminal, but also a device installed on a structure or a moving object. The structure or the moving object itself may be regarded as a communication device. In addition, the concept of the communication device includes not only a terminal device but also a base station and a relay station. The communication device is a type of processing device and information processing device. Furthermore, the communication device can be rephrased as a transmission device or a reception device.

Hereinafter, a configuration of each device constituting the communication system 1 will be specifically described. Note that the configuration of each device described below is merely an example. The configuration of each device may be different from the following configuration.

### <2-2. Configuration of management device>

Next, the configuration of the management device 10 will be described.

The management device 10 is a device that manages a radio network. For example, the management device 10 is a device that manages communication of the base station 20. When the core network is an evolved packet core (EPC), the management device 10 is, for example, a device having a function as a mobility management entity (MME). When the core network is a 5G core network (5GC), the management device 10 is, for example, a device having a function as an access and mobility management function (AMF) and/or a session management function (SMF). Of course, the functions of the management device 10 are not limited to the MME, the AMF, and the SMF. For example, when the core network is the 5GC, the management device 10 may be a device having a function as a network slice selection function (NSSF), an authentication server function (AUSF), or a unified data management (UDM). Furthermore, the management device 10 may be a device having a function as a home subscriber server (HSS).

The management device 10 may have a gateway function. For example, when the core network is the EPC, the management device 10 may have a function as a serving gateway (S-GW) or a packet data network gateway (P-GW). Further, when the core network is a 5GC, the management device 10 may have a function as a user plane function (UPF). The management device 10 does not necessarily have to be a device that constitutes the core network. For example, it is assumed that the core network is a core network of a Wideband Code Division Multiple Access (W-CDMA) or a Code Division Multiple Access 2000 (cdma 2000). At this time, the management device 10 may be a device that functions as a radio network controller (RNC).

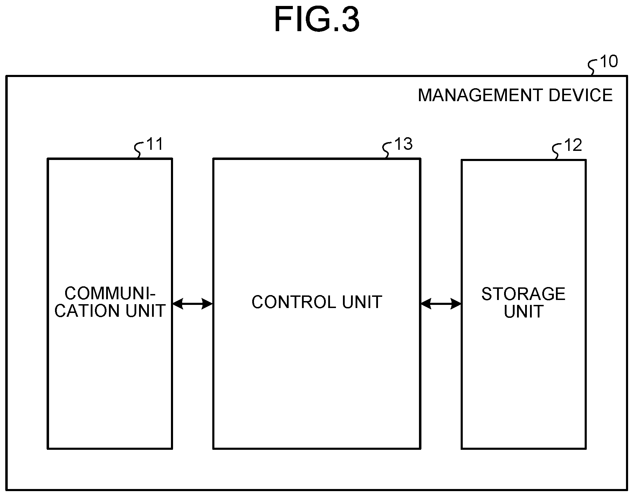

FIG. 3 is a diagram illustrating a configuration example of the management device 10 according to the embodiment of the present disclosure. The management device 10 includes a communication unit 11, a storage unit 12, and a control unit 13. The configuration illustrated in FIG. 3 is a functional configuration, and the hardware configuration may be different from this. Furthermore, the functions of the management device 10 may be statically or dynamically distributed and implemented in a plurality of physically separated configurations. For example, the management device 10 may be composed of a plurality of server devices.

The communication unit 11 is a communication interface for communicating with other devices. The communication unit 11 may be a network interface or an equipment connection interface. For example, the communication unit 11 may include a local area network (LAN) interface such as a network interface card (NIC), or may include a USB interface composed of a Universal Serial Bus (USB) host controller, a USB port, and the like. The communication unit 11 may be a wired interface or a wireless interface. The communication unit 11 functions as a communication means of the management device 10. The communication unit 11 communicates with the base station 20 and the like under the control of the control unit 13.

The storage unit 12 is a data readable/writable storage device such as a dynamic random access memory (DRAM), a static random access memory (SRAM), a flash memory, and a hard disk. The storage unit 12 functions as a storage means for the management device 10. The storage unit 12 stores, for example, a connected state of the terminal device 40. For example, the storage unit 12 stores a radio resource control (RRC) state or an EPS connection management (ECM) state or a 5G system connection management (CM) state of the terminal device 40. The storage unit 12 may function as a home memory that stores the positional information about the terminal device 40.

The control unit 13 is a controller that controls each unit of the management device 10. The control unit 13 is, for example, realized by a processor such as a central processing unit (CPU) or a micro processing unit (MPU). For example, the control unit 13 is realized by the processor executing various programs stored in the storage device inside the management device 10 with a random access memory (RAM) or the like as a work area. The control unit 13 may be realized by an integrated circuit such as an application specific integrated circuit (ASIC) or a field programmable gate array (FPGA). The CPU, the MPU, the ASIC, and the FPGA can all be considered as controllers.

### <2-3. Configuration of base station>

Next, the configuration of the base station 20 will be described.

The base station 20 is a radio communication device that performs radio communication with the terminal device 40. The base station 20 may be configured to wirelessly communicate with the terminal device 40 via the relay station 30, or may be configured to directly wirelessly communicate with the terminal device 40.

The base station 20 is a type of communication device. More specifically, the base station 20 is a device corresponding to a radio base station (Base Station, Node B, eNB, gNB, etc.) or a radio access point. The base station 20 may be a radio relay station. Further, the base station 20 may be an optical remote device called a remote radio head (RRH). Furthermore, the base station 20 may be a receiving station such as a field pickup unit (FPU). Furthermore, the base station 20 may be an integrated access and backhaul (IAB) donor node or an IAB relay node that provides a radio access line and a radio backhaul line by time division multiplexing, frequency division multiplexing, or space division multiplexing.

The radio access technology used by the base station 20 may be a cellular communication technology or a radio LAN technology. Of course, the radio access technology used by the base station 20 is not limited to these, and may be another radio access technology. For example, the radio access technology used by the base station 20 may be a low power wide area (LPWA) communication technology. Of course, the radio communication used by the base station 20 may be radio communication using millimeter waves. Further, the radio communication used by the base station 20 may be radio communication using the radio wave, or radio communication (optical radio) using infrared rays or visible light.

The base station 20 may be able to perform non-orthogonal multiple access (NOMA) communication with the terminal device 40. Here, the NOMA communication is communication using a non-orthogonal resource (transmission, reception, or both). Note that the base station 20 may be able to perform NOMA communication with another base station 20.

Note that the base stations 20 may be able to communicate with each other via an interface (for example, S1 interface) between a base station and a core network. This interface may be wired or wireless. Furthermore, the base stations may be capable of communicating with each other via an interface (for example, X2 interface, S1 interface, and the like) between the base stations. This interface may be wired or wireless.

Note that the base station devices 20 may be able to communicate with each other via an interface (for example, NG interface, S1 interface, and the like) between a base station and a core network. This interface may be wired or wireless. Furthermore, the base stations may be capable of communicating with each other via an interface (for example, Xn interface, X2 interface, and the like) between the base stations. This interface may be wired or wireless.

Note that the concept of the base station (also referred to as a base station device) includes not only a donor base station but also a relay base station (also referred to as a relay station or a relay station). Further, the concept of the base station includes not only a structure having a function of a base station but also a device installed in the structure.

The structure is, for example, a building such as a high-rise building, a house, a steel tower, a station facility, an airport facility, a port facility, or a stadium. In addition, the concept of structure includes not only the building, but also non-building structures such as a tunnel, a bridge, a dam, a fence, and an iron pillar, and facilities such as a crane, a gate, and a wind turbine. The concept of structure includes not only structures on land (ground in a narrow sense) or underground, but also structures on water such as a pier and a mega float, and structures underwater such as an ocean observation facility. The base station may be referred to as an information processing device.

The base station 20 may be a donor station or a relay station. Furthermore, the base station 20 may be a fixed station or a mobile station. The mobile station is a radio communication device (for example, the base station) configured to be movable. At this time, the base station 20 may be a device installed in the moving object or may be the moving object itself. For example, a relay station having mobility can be regarded as the base station 20 as a mobile station. In addition, a device that is originally a device having a mobile capability and has a function of a base station (at least part of the function of the base station), such as a vehicle, an unmanned aerial vehicle (UAV) typified by a drone, or a smartphone, also corresponds to the base station 20 as a mobile station.

Here, the moving object may be a mobile terminal such as a smartphone or a mobile phone. Further, the moving object may be a moving object (for example, a vehicle such as an automobile, a bicycle, a bus, a truck, a motorcycle, a train, a linear motor vehicle, and the like) that moves on land (ground in a narrow sense), or may be a moving object (for example, subway) that moves underground (for example, in a tunnel).

Further, the moving object may be a moving object (for example, a ship such as a passenger ship, a cargo ship, or a hovercraft) that moves on the water, or may be a moving object that moves underwater (for example, a submersible ship such as a submersible boat, a submarine, or an unmanned submarine).

Note that the moving object may be a moving object (for example, an aircraft such as an airplane, an airship, or a drone) that moves in the atmosphere.

Furthermore, the base station 20 may be a ground base station (ground station) installed on the ground. For example, the base station 20 may be a base station disposed in a structure on the ground, or may be a base station installed in a moving object moving on the ground. More specifically, the base station 20 may be an antenna installed in a structure such as a building and a signal processing device connected to the antenna. Of course, the base station 20 may be a structure or a moving object itself. "Ground" means not only on land (ground in a narrow sense) but also on the ground in a broad sense including underground, on water, and underwater. Note that the base station 20 is not limited to a ground base station. For example, in a case where the communication system 1 is a satellite communication system, the base station 20 may be an aircraft station. From the perspective of a satellite station, an aircraft station located on the earth is a ground station.

Note that the base station 20 is not limited to a ground station. The base station 20 may be a non-ground base station device (non-ground station device) capable of floating in the air or space. For example, the base station 20 may be an aircraft station or a satellite station.

The satellite station is a satellite station capable of floating outside the atmosphere. The satellite station may be a device mounted on a space moving object such as an artificial satellite, or may be a space moving object itself. A space moving object is a moving vehicle that moves outside the atmosphere. Examples of the space moving object include artificial celestial bodies such as artificial satellites, spacecraft, space stations, and probes.

The satellite that serves as the satellite station may be any of a low earth orbiting (LEO) satellite, a medium earth orbiting (MEO) satellite, a geostationary earth orbiting (GEO) satellite, and a highly elliptical orbiting (HEO) satellite. Of course, the satellite station may be a device mounted on a low earth orbiting satellite, a medium earth orbiting satellite, a geostationary earth orbiting satellite, or a highly elliptical orbiting satellite.

The aircraft station is a radio communication device that can float in the atmosphere such as an aircraft. The aircraft station may be a device mounted on an aircraft or the like, or may be an aircraft itself. The concept of the aircraft includes not only the heavy aircraft such as an airplane and a glider, but also the light aircraft such as a balloon and an airship. The concept of the aircraft includes not only the heavy aircraft and the light aircraft, but also the rotary-wing aircraft such as a helicopter and an autogyro. The aircraft station (or the aircraft on which the aircraft station is mounted) may be an unmanned aerial vehicle such as a drone.

In addition, the concept of the unmanned aerial vehicle includes unmanned aircraft systems (UAS) and tethered UAS. Also, the concept of the unmanned aerial vehicle includes lighter than air UAS (LTA) and heavier than air UAS (HTA). In addition, the concept of the unmanned aerial vehicle includes high altitude UAS platforms (HAPs).

The size of the coverage of the base station 20 may be as large as a macro cell or as small as a pico cell. Of course, the size of the coverage of the base station 20 may be extremely small, such as a femtocell. Further, the base station 20 may have a beamforming capability. In this case, the base station 20 may have cells or service areas formed for each beam.

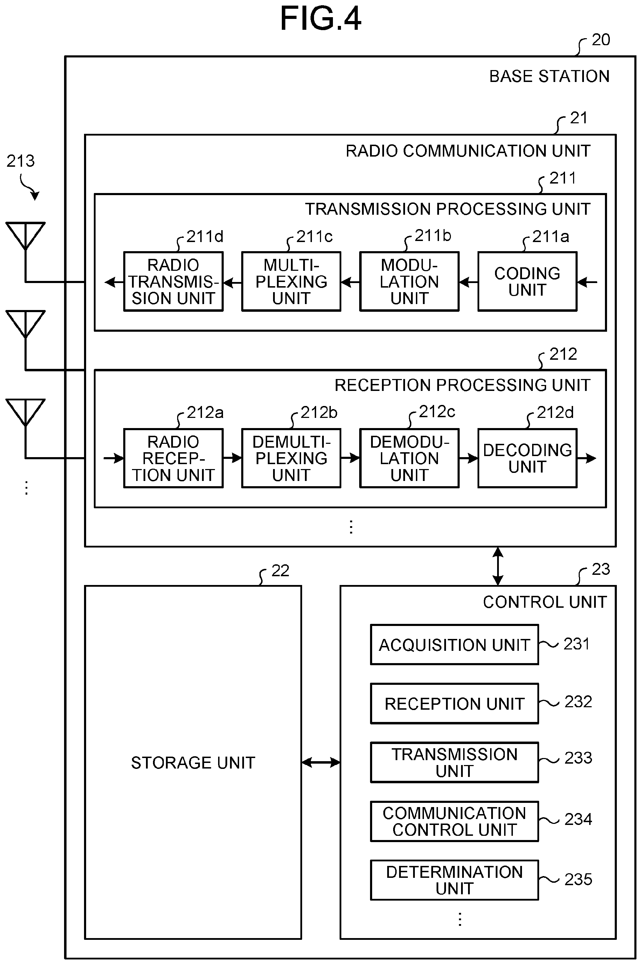

FIG. 4 is a diagram illustrating a configuration example of the base station 20 according to the embodiment of the present disclosure. The base station 20 includes a radio communication unit 21, a storage unit 22, and a control unit 23. The configuration illustrated in FIG. 4 is a functional configuration, and the hardware configuration may be different from this. Further, the function of the base station 20 may be distributed and implemented in a plurality of physically separated configurations.

The radio communication unit 21 is a signal processing unit for wirelessly communicating with other radio communication devices (for example, the terminal device 40). The radio communication unit 21 operates under the control of the control unit 23. The radio communication unit 21 supports one or a plurality of radio access methods. For example, the radio communication unit 21 supports both the NR and the LTE. The radio communication unit 21 may support the W-CDMA and the cdma 2000 in addition to the NR and the LTE. Furthermore, the radio communication unit 21 may support an automatic retransmission technology such as Hybrid Automatic Repeat reQuest (HARQ).

The radio communication unit 21 includes a transmission processing unit 211, a reception processing unit 212, and an antenna 213. The radio communication unit 21 may include a plurality of transmission processing units 211, a plurality of reception processing units 212, and a plurality of antennas 213. When the radio communication unit 21 supports a plurality of radio access methods, each unit of the radio communication unit 21 may be individually configured for each radio access method. For example, the transmission processing unit 211 and the reception processing unit 212 may be individually configured by the LTE and the NR. Furthermore, the antenna 213 may include a plurality of antenna elements (for example, a plurality of patch antennas). In this case, the radio communication unit 21 may be configured to be beamformable. The radio communication unit 21 may be configured to be able to perform polarization beamforming using vertically polarized waves (V-polarized waves) and horizontally polarized waves (H-polarized waves).

The transmission processing unit 211 performs transmission processes of downlink control information and downlink data. For example, the transmission processing unit 211 encodes the downlink control information and the downlink data input from the control unit 23 using a coding method such as block coding, convolutional coding, or turbo coding. Here, the coding may be performed by polar code coding or low density parity check code (LDPC code) coding. Then, the transmission processing unit 211 modulates the coded bits by a predetermined modulation method such as BPSK, QPSK, 16 QAM, 64 QAM, or 256 QAM. In this case, the signal points on the constellation do not necessarily have to be equidistant. The constellation may be a non-uniform constellation. Then, the transmission processing unit 211 multiplexes the modulation symbol of each channel and the downlink reference signal and arranges them in a predetermined resource element. Then, the transmission processing unit 211 performs various types of signal process on the multiplexed signal. For example, the transmission processing unit 211 performs processing such as conversion into a frequency domain by fast Fourier transform, addition of a guard interval (cyclic prefix), generation of a baseband digital signal, conversion into an analog signal, quadrature modulation, up-conversion, removal of an extra frequency component, and amplification of power. The signal generated by the transmission processing unit 211 is transmitted from the antenna 213.

The reception processing unit 212 performs a process of the uplink signal received via the antenna 213. For example, the reception processing unit 212 performs, on the uplink signal, down-conversion, removal of unnecessary frequency components, control of amplification level, orthogonal demodulation, conversion to digital signals, removal of guard intervals (cyclic prefix), extraction of frequency domain signals by fast Fourier transform, and the like. Then, the reception processing unit 212 separates an uplink channel such as a physical uplink shared channel (PUSCH) and a physical uplink control channel (PUCCH) and an uplink reference signal from the signals subjected to these processes. Further, the reception processing unit 212 demodulates the reception signal using a modulation method such as binary phase shift keying (BPSK) or quadrature phase shift keying (QPSK) on the modulation symbol of the uplink channel. The modulation method used for demodulation may be 16 quadrature amplitude modulation (QAM), 64 QAM, or 256 QAM. In this case, the signal points on the constellation do not necessarily have to be equidistant. The constellation may be a non-uniform constellation (NUC). Then, the reception processing unit 212 performs a decryption process on the demodulated encoded bits of the uplink channel. The decoded uplink data and uplink control information are output to the control unit 23.

The antenna 213 is an antenna device (antenna unit) that mutually converts a current and a radio wave. The antenna 213 may include one antenna element (for example, one patch antenna) or may include a plurality of antenna elements (for example, a plurality of patch antennas). In a case where the antenna 213 includes a plurality of antenna elements, the radio communication unit 21 may be configured to be beamformable. For example, the radio communication unit 21 may be configured to generate a directional beam by controlling the directivity of a radio signal using a plurality of antenna elements. Note that the antenna 213 may be a dual-polarized antenna. When the antenna 213 is a dual-polarized antenna, the radio communication unit 21 may use vertically polarized waves (V-polarized waves) and horizontally polarized waves (H-polarized waves) in transmitting radio signals. Then, the radio communication unit 21 may control the directivity of the radio signal transmitted using the vertically polarized wave and the horizontally polarized wave.

The storage unit 22 is a data readable/writable storage device such as a DRAM, an SR_AM, a flash memory, and a hard disk. The storage unit 22 functions as a storage means for the base station 20.

The control unit 23 is a controller that controls each unit of the base station 20. The control unit 23 is realized, for example, by a processor such as a central processing unit (CPU) or a micro processing unit (MPU). For example, the control unit 23 is realized by the processor executing various programs stored in the storage device inside the base station 20 with a random access memory (RAM) or the like as a work area. The control unit 23 may be realized by an integrated circuit such as an application specific integrated circuit (ASIC) or a field programmable gate array (FPGA). The CPU, the MPU, the ASIC, and the FPGA can all be considered as controllers. Furthermore, the control unit 23 may be realized by a graphics processing unit (GPU) in addition to or instead of the CPU.

The control unit 23 includes an acquisition unit 231, a reception unit 232, a transmission unit 233, a communication control unit 234, and a determination unit 235. Each block (acquisition unit 231 to determination unit 235) constituting the control unit 23 is a functional block indicating a function of the control unit 23. These functional blocks may be software blocks or hardware blocks. For example, each of the above functional blocks may be one software module realized by software (including a microprogram), or may be one circuit block on a semiconductor chip (die). Of course, each functional block may be one processor or one integrated circuit. The control unit 23 may be configured in a functional unit different from the above-mentioned functional block. The method of configuring the functional block is arbitrary.

In some embodiments, the concept of a base station may be composed of an assembly of a plurality of physical or logical devices. For example, in the embodiment, the base station may be distinguished into a plurality of apparatuses such as a Baseband Unit (BBU) and a Radio Unit (RU). Then, the base station may be interpreted as an assembly of the plurality of apparatuses. In addition, the base station may be either or both of a BBU and an RU. The BBU and the RU may be connected by a predetermined interface (for example, enhanced common public radio interface (eCPRI)). The RU may be referred to as a remote radio unit (RRU) or a radio dot (RD). Furthermore, the RU may support a gNB distributed unit (gNB-DU) described below. Further, the BBU may support a gNB central unit (gNB-CU) described below. Further, the RU may be an apparatus integrally formed with the antenna. An antenna (for example, an antenna integrally formed with an RU) included in the base station may adopt an Advanced Antenna System and support MIMO (for example, FD-MIMO) or beamforming. Furthermore, the antenna included in the base station may include, for example, 64 transmission antenna ports and 64 reception antenna ports.

In addition, the antenna mounted on the RU may be an antenna panel including one or more antenna elements, and the RU may include one or more antenna panels. For example, the RU may include two antenna panels of a horizontally polarized antenna panel and a vertically polarized antenna panel, or two antenna panels of a clockwise circularly polarized antenna panel and a counterclockwise circularly polarized antenna panel. In addition, the RU may form and control an independent beam for each antenna panel.

Note that a plurality of base stations may be connected to each other. The one or more base stations may be included in a radio access network (RAN). In this case, the base station may be simply referred to as a RAN, a RAN node, an access network (AN), or an AN node. Note that the RAN in LTE is sometimes referred to as an enhanced universal terrestrial RAN (EUTRAN). In addition, the RAN in NR may be referred to as an NGRAN. In addition, the RAN in W-CDMA (UMTS) is sometimes referred to as a UTRAN.

The LTE base station may be referred to as an evolved node B (eNodeB) or an eNB. At this time, the EUTR_AN includes one or more eNodeBs (eNBs). Also, the NR base station may be referred to as a gNodeB or a gNB. At this time, the NGR_AN includes one or more gNBs. The EUTR_AN may include a gNB (en-gNB) connected to a core network (EPC) in an LTE communication system (EPS). Similarly, the NGRAN may include an ng-eNB connected to a core network 5GC in a 5G communication system (5GS).

When the base station is an eNB, a gNB, or the like, the base station may be referred to as 3GPP access. In addition, when the base station is a radio access point, the base station may be referred to as non-3GPP access. Further, the base station may be an optical remote device called a remote radio head (RRH). Furthermore, in a case where the base station is a gNB, the base station may be a combination of the gNB-CU and the gNB-DU described above, or may be any one of the gNB-CU and the gNB-DU.

Here, the gNB-CU hosts a plurality of upper layers (for example, RRC, SDAP, PDCP) among an access stratum for communication with the UE. On the other hand, the gNB-DU hosts a plurality of lower layers (for example, RLC, MAC, PHY) among an access stratum. That is, among messages/information to be described later, the RRC signaling (quasi-static notification) may be generated by the gNB-CU, while the MAC CE and the DCI (dynamic notification) may be generated by the gNB-DU. Alternatively, in the RRC configuration (quasi-static notification), for example, some configurations such as IE: cellGroupConfig may be generated by the gNB-DU, and the remaining configurations may be generated by the gNB-CU. These configurations may be transmitted and received through an F1 interface described later.

Note that the base station may be configured to be able to communicate with another base station. For example, when a plurality of base station devices is eNBs or a combination of an eNB and an en-gNB, the base stations may be connected by an X2 interface. Furthermore, in a case where a plurality of base stations is gNBs or a combination of a gn-eNB and a gNB, the devices may be connected by an Xn interface. Furthermore, in a case where a plurality of base stations is a combination of the gNB-CU and the gNB-DU, the devices may be connected by the above-described F1 interface. A message/information (for example, RRC signaling, MAC control element (MAC CE), or DCI) to be described later may be transmitted between a plurality of base stations, for example, via the X2 interface, the Xn interface, or the F1 interface.

A cell provided by the base station may be referred to as a serving cell. The concept of the serving cell includes a primary cell (PCell) and a secondary cell (SCell). When dual connectivity is provided to the UE (for example, the terminal device 40), the PCell provided by the master node (MN) and zero or one or more SCells may be referred to as a master cell group. Examples of dual connectivity include EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity.

Further, the serving cell may include a primary secondary cell or primary SCG cell (PSCell). When dual connectivity is provided to the UE, the PSCell provided by the secondary node (SN) and zero or one or more SCells may be referred to as secondary cell group (SCG). Unless specially configured (for example, PUCCH on SCell), the physical uplink control channel (PUCCH) is transmitted by the PCell and the PSCell, but is not transmitted by the SCell. In addition, a radio link failure is detected in the PCell and the PSCell, but is not detected in the SCell (may not be detected). As described above, since the PCell and the PSCell have a special role in the serving cell, they may be referred to as a special cell (SpCell).

One downlink component carrier and one uplink component carrier may be associated with one cell. In addition, the system bandwidth corresponding to one cell may be divided into a plurality of bandwidth parts (BWPs). In this case, one or a plurality of BWPs may be configured for the UE, and one BWP may be used for the UE as an active BWP. In addition, the radio resources (for example, a frequency band, a numerology (subcarrier spacing), slot format (slot configuration))that can be used by the terminal device 40 may be different for each cell, each component carrier, or each BWP.

### <2-4. Configuration of relay station>

Next, the configuration of the relay station 30 will be described.

The relay station 30 is a device serving as a relay station of the base station. The relay station 30 is a type of base station. The relay station 30 is a type of information processing device. The relay station may be referred to as a relay base station.

The relay station 30 can perform radio communication such as NOMA communication with the terminal device 40. The relay station 30 relays communication between the base station 20 and the terminal device 40. Note that the relay station 30 may be configured to be able to wirelessly communicate with another relay station 30 and the base station 20. The relay station 30 may be a ground station device or a non-ground station device. The relay station 30 constitutes a radio access network RAN together with the base station 20.

Note that the relay station of the present embodiment may be a fixed device, a movable device, or a floating device. In addition, the size of the coverage of the relay station of the present embodiment is not limited to a specific size. For example, the cell covered by the relay station may be a macro cell, a micro cell, or a small cell.

In addition, the relay station of the present embodiment is not limited to the mounted device as long as the function of relay is satisfied. For example, the relay may be mounted on a terminal device such as a smartphone, may be mounted on an automobile, a train, or a humanpowered vehicle, may be mounted on a balloon, an airplane, or a drone, or may be mounted on a home appliance such as a television, a game machine, an air conditioner, a refrigerator, or a lighting fixture.

In addition, the configuration of the relay station 30 may be similar to the configuration of the base station 20 described above. For example, as in the base station 20 described above, the relay station 30 may be a device installed in a moving object or may be a moving object itself. As described above, the moving object may be a mobile terminal such as a smartphone or a mobile phone. In addition, the moving object may be a moving object that moves on land (on the ground in a narrow sense) or may be a moving object that moves in the ground. Of course, the moving object may be a moving object that moves on water or may be a moving object that moves under water. In addition, the moving object may be a moving object that moves inside the atmosphere or may be a moving object that moves outside the atmosphere. Furthermore, the base station 20 may be a ground station device or a non-ground station device. At this time, the relay station 30 may be an aircraft station or a satellite station.

Furthermore, the size of the coverage of the relay station 30 may be large such as a macro cell or small such as a pico cell, as in the base station 20. Of course, the size of the coverage of the relay station 30 may be extremely small such as a femto cell. Further, the relay station 30 may have a beamforming capability. In this case, the relay station 30 may have cells or service areas formed for each beam.

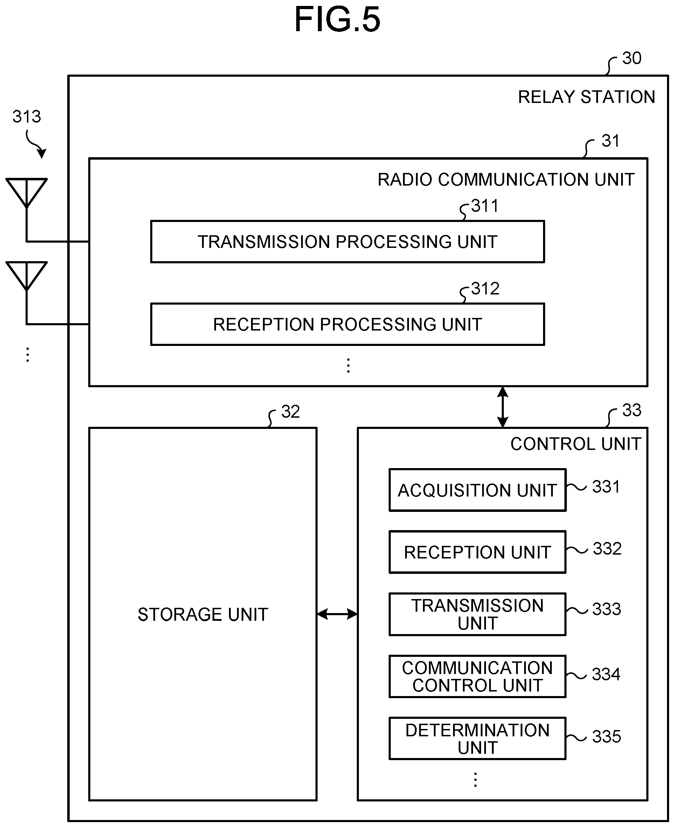

FIG. 5 is a diagram illustrating a configuration example of the relay station 30 according to the embodiment of the present disclosure. The relay station 30 includes a radio communication unit 31, a storage unit 32, and a control unit 33. The configuration illustrated in FIG. 5 is a functional configuration, and the hardware configuration may be different from this. Furthermore, the functions of the relay station 30 may be implemented in a distributed manner in a plurality of physically separated configurations.

The radio communication unit 31 is a radio communication interface that wirelessly communicates with other radio communication devices (for example, the base station 20, the terminal device 40, and another relay station 30). The radio communication unit 31 supports one or a plurality of radio access methods. For example, the radio communication unit 31 supports both the NR and the LTE. The radio communication unit 31 may support the W-CDMA and the cdma 3000 in addition to the NR and the LTE. The radio communication unit 31 includes a transmission processing unit 311, a reception processing unit 312, and an antenna 313. The radio communication unit 31 may include a plurality of transmission processing units 311, a plurality of reception processing units 312, and a plurality of antennas 313. When the radio communication unit 31 supports a plurality of radio access methods, each unit of the radio communication unit 31 may be individually configured for each radio access method. For example, the transmission processing unit 311 and the reception processing unit 312 may be individually configured by the LTE and the NR. The configurations of the transmission processing unit 311, the reception processing unit 312, and the antenna 313 are similar to the configurations of the transmission processing unit 311, the reception processing unit 312, and the antenna 313 described above. Note that the radio communication unit 31 may be configured to be beamformable as in the radio communication unit 21.

The storage unit 32 is a data readable/writable storage device such as a DRAM, an SRAM, a flash memory, and a hard disk. The storage unit 32 functions as a storage means of the relay station 30.

The control unit 33 is a controller that controls each unit of the relay station 30. The control unit 33 is realized by, for example, a processor such as a CPU or an MPU. For example, the control unit 33 is realized by the processor executing various programs stored in a storage device inside the relay station 30 using a RAM or the like as a work area. The control unit 33 may be realized by an integrated circuit such as an ASIC or an FPGA. The CPU, the MPU, the ASIC, and the FPGA can all be considered as controllers.

The control unit 33 includes an acquisition unit 331, a reception unit 332, a transmission unit 333, a communication control unit 334, and a determination unit 335. Each block (acquisition unit 331 to determination unit 335) constituting control unit 33 is a functional block indicating a function of control unit 33. These functional blocks may be software blocks or hardware blocks. For example, each of the above functional blocks may be one software module realized by software (including a microprogram), or may be one circuit block on a semiconductor chip (die). Of course, each functional block may be one processor or one integrated circuit. The control unit 33 may be configured in a functional unit different from the above-mentioned functional block. The method of configuring the functional block is arbitrary.

The operation of each block (the acquisition unit 331 to the determination unit 335) of the control unit 33 may be the same as the operation of each block (the acquisition unit 231 to the determination unit 235) of the control unit 23 of the base station 20. Conversely, the operation of each block (the acquisition unit 231 to the determination unit 235) of the control unit 23 may be the same as the operation of each block (the acquisition unit 331 to the determination unit 335) of the control unit 33 of the relay station 30.

Note that the relay station 30 may be an IAB relay node. The relay station 30 operates as a mobile termination (IAB-MT) for the IAB donor node that provides backhaul, and operates as a distributed unit (IAB-DU) for the terminal device 40 that provides access. The IAB donor node may be, for example, the base station 20, and operates as an IAB-CU (Central Unit).

### <2-5. Configuration of terminal device>

Next, the configuration of the terminal device 40 will be described.

The terminal device 40 is a radio communication device that wirelessly communicates with other communication devices such as the base station 20 and the relay station 30. The terminal device 40 is, for example, a mobile phone, a smart device (smartphone or tablet), a personal digital assistant (PDA), and a personal computer. Furthermore, the terminal device 40 may be a device such as a business camera provided with a communication function, or may be a motorcycle, a moving relay vehicle, or the like on which the communication equipment such as a field pickup unit (FPU) is mounted. Further, the terminal device 40 may be a machine to machine (M2M) device or an Internet of things (IoT) device.

Note that the terminal device 40 may be able to perform NOMA communication with the base station 20. Furthermore, the terminal device 40 may be able to use an automatic retransmission technology such as HARQ when communicating with the base station 20. The terminal device 40 may be able to perform sidelink communication with another terminal device 40. The terminal device 40 may be able to use an automatic retransmission technology such as HARQ when performing sidelink communication. Note that the terminal device 40 may be able to perform NOMA communication in communication (sidelink) with other terminal devices 40. Furthermore, the terminal device 40 may be able to perform LPWA communication with other communication devices (for example, the base station 20 and another terminal device 40). Furthermore, the radio communication used by the terminal device 40 may be radio communication using millimeter waves. The radio communication (including sidelink communication) used by the terminal device 40 may be radio communication using radio waves, or may be radio communication (optical radio) using infrared rays or visible light.

Furthermore, the terminal device 40 may be a mobile device. The mobile device is a mobile radio communication device. The terminal device 40 may be a radio communication device installed in the moving object, or may be the moving object itself. For example, the terminal device 40 may be a vehicle moving on the road such as an automobile, a bus, a truck, or a motorcycle, or a radio communication device mounted on the vehicle. The moving object may be a mobile terminal, or may be a moving object that moves on land (ground in a narrow sense), underground, on water, or underwater. Further, the moving object may be a moving object that moves in the atmosphere such as a drone or a helicopter, or may be a moving object that moves outside the atmosphere such as an artificial satellite.

The terminal device 40 may be simultaneously connected to a plurality of base stations or a plurality of cells to perform communication. For example, in a case where one base station supports a communication area via a plurality of cells (for example, pCell, sCell), it is possible to bundle the plurality of cells and communicate between the base station 20 and the terminal device 40 by a carrier aggregation (CA) technology, a dual connectivity (DC) technology, or a multi-connectivity (MC) technology. Alternatively, the terminal device 40 and the plurality of base stations 20 can communicate with each other by a coordinated multi-point transmission and reception (CoMP) technology via cells of different base stations 20.

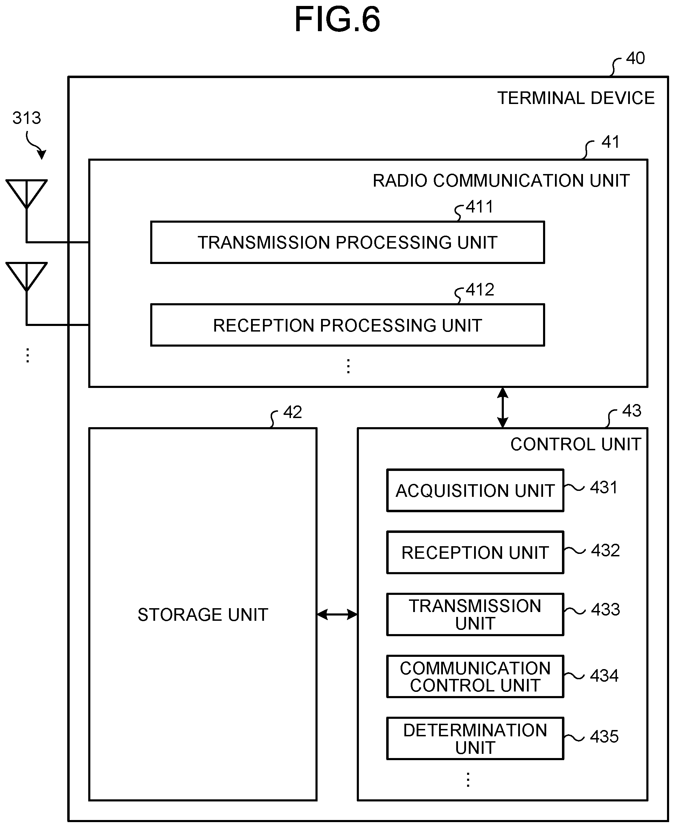

FIG. 6 is a diagram illustrating a configuration example of the terminal device 40 according to the embodiment of the present disclosure. The terminal device 40 includes a radio communication unit 41, a storage unit 42, and a control unit 43. The configuration illustrated in FIG. 6 is a functional configuration, and the hardware configuration may be different from this. Further, the function of the terminal device 40 may be distributed and implemented in a plurality of physically separated configurations.

The radio communication unit 41 is a signal processing unit for wirelessly communicating with other radio communication devices (for example, the base station 20, the relay station 30, and another terminal device 40). The radio communication unit 41 operates under the control of the control unit 43. The radio communication unit 41 includes a transmission processing unit 411, a reception processing unit 412, and an antenna 413. The configurations of the radio communication unit 41, the transmission processing unit 411, the reception processing unit 412, and the antenna 413 may be similar to those of the radio communication unit 21, the transmission processing unit 211, the reception processing unit 212, and the antenna 213 of the base station 20. Further, the radio communication unit 41 may be configured to be beamformable as in the radio communication unit 21.

The storage unit 42 is a data readable/writable storage device such as a DRAM, an SRAM, a flash memory, and a hard disk. The storage unit 42 functions as a storage means for the terminal device 40.

The control unit 43 is a controller that controls each unit of the terminal device 40. The control unit 43 is realized by, for example, a processor such as a CPU or an MPU. For example, the control unit 43 is realized by the processor executing various programs stored in the storage device inside the terminal device 40 with a RAM or the like as a work area. The control unit 43 may be realized by an integrated circuit such as an ASIC or an FPGA. The CPU, the MPU, the ASIC, and the FPGA can all be considered as controllers. Furthermore, the control unit 43 may be realized by a GPU in addition to or instead of the CPU.

The control unit 43 includes an acquisition unit 431, a reception unit 432, a transmission unit 433, a communication control unit 434, and a determination unit 435. Each block (acquisition unit 431 to determination unit 435) constituting the control unit 43 is a functional block indicating a function of the control unit 43. These functional blocks may be software blocks or hardware blocks. For example, each of the above functional blocks may be one software module realized by software (including a microprogram), or may be one circuit block on a semiconductor chip (die). Of course, each functional block may be one processor or one integrated circuit. The control unit 43 may be configured in a functional unit different from the above-mentioned functional block. The method of configuring the functional block is arbitrary.

### <<3. Network architecture»

The configuration of the communication system 1 is described above. Next, a network architecture applicable to the communication system 1 of the present embodiment will be described.

### <3-1. Configuration example of network architecture>

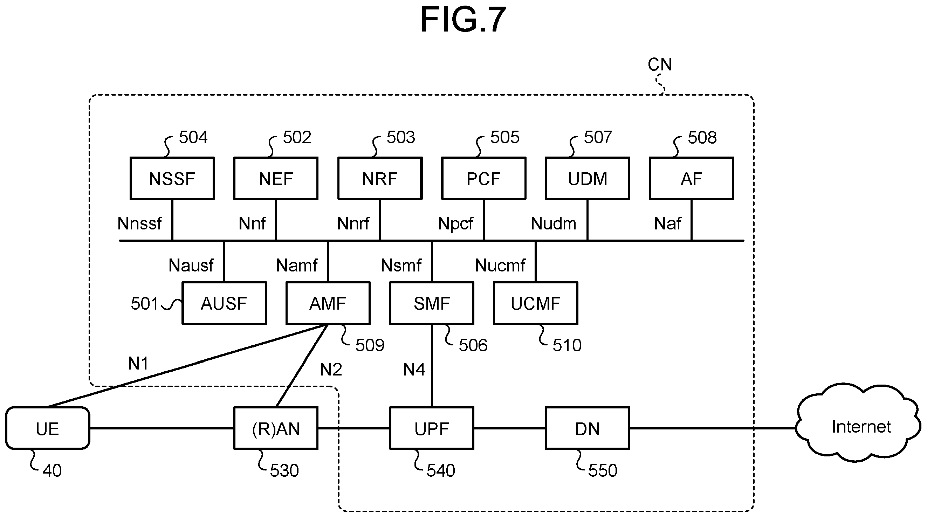

First, an architecture of a fifth generation mobile communication system (5G) will be described as an example of a core network CN of the communication system 1. FIG. 7 is a diagram illustrating an example of the 5G architecture. The 5G core network CN is also referred to as 5G core (5GC)/next generation core (NGC). Hereinafter, the 5G core network CN is also referred to as a 5GC/NGC. The core network CN is connected to the user equipment (UE) 40 via the (R)AN 530. The UE 40 is the terminal device 40.

The (R)AN 530 has a function of enabling connection to a radio access network (RAN) and connection to an access network (AN) other than the RAN. The (R)AN 530 includes a base station called a gNB or an ng-eNB.

The core network CN mainly performs connection permission and session management when the UE 40 is connected to the network. The core network CN may include one or a plurality of management devices 10. The core network CN includes a user plane function group and a control plane function group.

The user plane function group includes a user plane function (UPF) 540 and a data network (DN) 550. The UPF 540 has a function of a user plane process. The UPF 540 includes a routing/forwarding function of data handled in a user plane. The DN 550 has an entity which provides a connection to an operator's own service, such as a mobile network operator (MNO), a function of providing a function of providing an Internet connection, or a function of providing a connection to a third party service. As described above, the user plane function group plays a role of a gateway serving as a boundary between the core network CN and the Internet.

The control plane function group includes an authentication server function (AUSF) 501, a network exposure function (NEF) 502, a network repository function (NRF) 503, a network slice selection function (NSSF) 504, a policy control function (PCF) 505, a session management function (SMF) 506, a unified data management (UDM) 507, an application function (AF) 508, an access and mobility management function (AMF) 509, and a UE radio capability management function (UCMF) 510. The UDM 507 includes a unified data repository (UDR) that holds and manages subscriber information, and a front end (FE) unit that processes the subscriber information.

The AUSF 501 has an authentication function. The NEF 502 has a function of providing network function capabilities and events to a third party, the AF 508, and edge computing functions. The NRF 503 has a function of finding a network function and holding a profile of the network function. The NSSF 504 has a function related to selection of a network slice. The PCF 505 has a function of policy control. The SMF 506 has functions such as session management and IP assignment and management of the UE 40. The UDM 507 has functions of generating 3GPP AKA authentication information and processing a user ID. The AF 508 has a function of providing a service by interacting with each network function (NF) of the core network. The AMF 509 has functions such as a registration process, connection management, and mobility management of the UE 40.

The UCMF 510 holds UE radio capability information corresponding to all UE radio capability IDs in the PLMN, and is responsible for assigning each PLMN-assigned UE radio capability ID.

Here, Namf is a service-based interface provided by the AMF 509, Nsmf is a service-based interface provided by the SMF 506, Nnef is a service-based interface provided by the NEF 503, Npcf is a service-based interface provided by the PCF 505, Nudm is a service-based interface provided by the UDM 507, Naf is a service-based interface provided by the AF 508, Nnrf is a service-based interface provided by the NRF 503, Nnssf is a service-based interface provided by the NSSF 504, and Nausf is a service-based interface provided by the AUSF 5010, and each NF exchanges information with another NF via each service-based interface.

In addition, N1 is a reference point between the UE 40 and the AMF 509, N2 is a reference point between the (R)AN 530 and the AMF 509, N4 is a reference point between the SMF 506 and the UPF 540, and information is exchanged between the NFs.

In order for the UE 40 to be permitted to provide a service via the core network CN, it is required to be registered in the core network CN. The UE 40 selects a PLMN to which the core network CN belongs and performs a registration procedure.

### <3-2. Registration procedure>

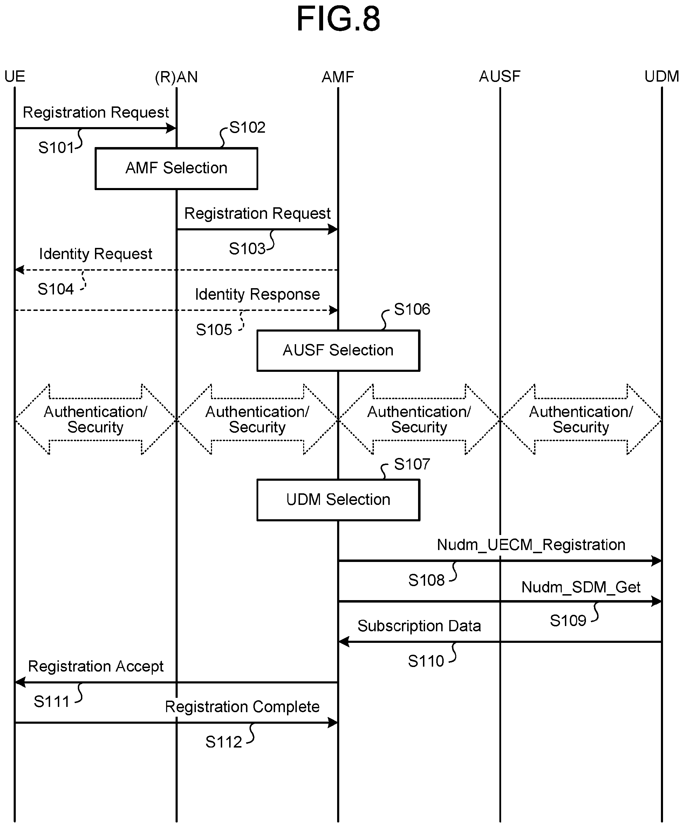

FIG. 8 is a sequence diagram illustrating an example of a registration procedure. Hereinafter, the registration procedure will be described with reference to FIG. 8.

The UE 40 which is not registered in the core network CN transmits a registration request message to the (R)AN 530 in order to perform initial registration (Step S101). Here, the state not registered in the core network CN is, for example, a registration management deregistered (RM-DEREGISTERED) state. Note that the UE 40 is required to include the UE identity in the registration request message to transmit the registration request message.

The UE identity is a 5G-GUTI mapped from an EPS GUTI when it has a valid EPS GUTI. Here, an Evolved Packet System (EPS) is a Long Term Evolution (LTE) of a 4G system. The globally unique temporary identifier (EPS GUTI) is a temporary ID used to identify a UE in the EPS instead of an ID uniquely assigned to each UE such as an international mobile subscriber identity (IMSI) or an international mobile equipment identity (IMEI) from the viewpoint of security.

Alternatively, the UE identity is a PLMN-specific 5G-GUTI assigned by the PLMN with which the UE is attempting registration, if available.

Alternatively, the UE identity is a PLMN-specific 5G-GUTI assigned by a PLMM treated as an equivalent PLMN to the PLMN with which the UE is attempting registration, if available.

Alternatively, the UE identity is a PLMN-specific 5G-GUTI assigned by any PLMN if available.

Otherwise, the UE 40 is required to include a subscription concealed identifier (SUCI) in the registration request message. Here, the SUCI is an ID obtained by encrypting a subscription permanent identifier (SUPI) which is an ID uniquely assigned to each UE.

In addition, the registration request message may include a UE radio capability ID. The UE radio capability ID is an ID for identifying UE radio capability information, and can identify, as the UE radio capability information, adaptability to switching of the signal processing scheme described above and a type or a set of signal processing schemes that can be supported at the time of switching. The UE radio capability information may include information indicating whether the UE 40 can switch the signal processing scheme.

When the UE radio capability information is changed, a UE radio capability update is included in a registration request message, and a registration procedure is performed as a mobility registration update request. In the case of connection management connected (CM-CONNECTED), the UE 40 first transitions to CM-IDLE and then performs a registration procedure for the UE radio capability update.

When receiving the registration request message from the UE 40, the (R)AN 530 performs AMF selection (Step S102). When a 5G S-temporary mobile subscription identifier (5G-S-TMSI) or a globally unique AMF identifier (GUAMI) is not included, or the 5G-S-TMSI or the GUAMI does not indicate a valid AMF 509, the AMF 509 is selected based on radio access technology ((R)AT) and, if available, requested network slice selection assist information (NSSAI).

When the (R)AN 530 is a next generation ran (NG-R_AN), a registration request including the selected PLMN ID and the UE radio capability ID is transferred to the AMF 509 (Step S103).

The AMF 509 holds UE radio capability information about the UE 40 based on the received UE radio capability ID. That is, the AMF 509 holds information related to adaptability to switching of the signal processing scheme of the UE 40, a type or a set of the signal processing schemes that can be supported at the time of switching.

Here, in a case where the NG-RAN does not support UE radio capability signalling optimisation (RACS) or the AMF 509 has the UE radio capability ID but does not have the UE radio capability information, the AMF 509 acquires the corresponding UE radio capability information from the UCMF 510 by using Nucmf_UECapabilityManagement_Resolve. When the NG-RAN is required to acquire UE radio capability information corresponding to the UE radio capability ID, the NG-RAN requests the AMF 509 for the UE radio capability information by using N2 signaling.

When the UE 40 has not provided SUCI to the AMF 509, the AMF 509 activates an identity request process and sends an identity request message to the UE 40 to request the SUCI (Step S104).

When receiving the Identity request message, the UE 40 responds with an identity response message including the SUCI (Step S105). Here, the UE 40 can acquire the SUCI by using a public key of the HPLMN.

The AMF 509 executes the AUSF selection based on the SUPI or the SUCI and activates the authentication of the UE 40 (Step S106).

When receiving a request for authentication from the AMF 509, the AUSF 501 is required to perform authentication of the UE 40. The AUSF 501 selects the UDM 507 as an authentication process and acquires authentication data from the UDM 507. When the UE 40 is authenticated, the AUSF 501 provides security information to the AMF 509.

Upon successful authentication with the AMF 509, the AMF 509 activates an NG application protocol (NGAP) process to provide a security context to the (R)AN 530.

The (R)AN 530 maintains the security context and returns a response to the AMF 509. The (R)AN 530 thereafter uses this security context to protect messages exchanged with the UE 40.

The AMF 509 performs UDM selection based on the SUPI, and selects the UDM 507 (Step S107). The AMF 509 transmits Nudm_UECM_Registration to the UDM 507 (Step S108). As a result, the AMF 509 is registered in the UDM 507.

When the AMF 509 does not have subscription data of the UE 40, the AMF 509 transmits Nudm_SDM_Get to the UDM 507 (Step S109). In response to the transmission, the UDM 507 transmits subscription data such as access and mobility subscription data and SMF selection subscription data to the AMF 509 (Step S110) .

The AMF 509 acquires access and mobility subscription data from the UDM 507, and then generates a UE context. The access and mobility subscription data includes information indicating whether NSSAI may be included in plain text in RRC connection establishment in 3GPP access.

Thereafter, the AMF 509 transmits a registration accept 411 to the UE 40 (Step S111). The registration accept message includes information about the 5G-GUTI and the registration area. In addition, the registration accept message may include a PLMN-assigned UE radio capability ID or a PLMN-assigned UE Radio Capability ID deletion.

The network (PLMN) may use this PLMN-assigned UE radio capability ID to configure a UE radio capability ID for the UE 40. For example, the network can notify the UE 40 of the activation of the function of switching the signal processing scheme, or the type or set of the signal processing scheme to be used.

The AMF 509 may determine the PLMN-assigned UE radio capability ID based on the UE radio capability information received from the UE 40.

Note that the UE 40 that has received the PLMN-assigned UE radio capability ID deletion is required to delete the PLMN-assigned UE radio capability ID. For example, the function of switching the signal processing scheme set from the network is deactivated, or the information related to the type or set of the signal processing scheme to be used is deleted.

In addition, the AMF 509 may provide a list of equivalent PLMNs to the UE 40 to be registered in the PLMN, but the AMF 509 should not provide a list of equivalent PLMNs to the UE 40 to be registered in the stand-alone NPN (SNPN).

The UE 40 transmits a registration complete message to the AMF 509 to make notification that a new 5G-GUTI is assigned (Step S112).

According to the above processing, the terminal device 40 which is the UE 40 enters the registration state (RM-REGISTERED state) with respect to the core network CN, that is, the network belonging to the PLMN.

Note that the AMF 509 can assign the PLMN-assigned UE radio capability ID to the UE 40 via a UE configuration update command message in a UE configuration update process, in addition to assigning the PLMN-assigned UE radio capability ID to the UE 40 via a registration accept message in a registration procedure.

In addition, since the type of the supportable signal processing scheme may be different for each cell, the (R)AN 530 may provide information about adaptability to switching of the signal processing scheme, a type or a set of the signal processing schemes that can be supported at the time of switching via system information for each cell. For example, notification of information related to a signal processing scheme used at the time of the initial access is provided via a master information block (MIB). Furthermore, dynamic switching of the signal processing scheme is controlled via a system information block (SIB).

The (R)AN 530 may control switching of the signal processing scheme for each UE 40. The (R)AN 530 controls switching of the signal processing scheme for each of the UEs 40 via radio resource control (RRC), for example. The (R)AN 530 notifies the UE 40 of RRC_CONNECTED of system information including information necessary for dynamic switching of the signal processing scheme or UE capability information elements by using dedicated signalling, for example, an RRC reconfiguration message. Here, the information necessary for the dynamic switching of the signal processing scheme may include information related to adaptability to switching of the signal processing scheme, a type or a set of signal processing schemes that can be supported at the time of switching, and information instructing the dynamic switching of the signal processing scheme.

### <<4. Basic operation of communication system>>

Although the network architecture is described above, the basic operation of the communication system 1 will be described before describing the operation of the communication system 1 that solves the problem of the present embodiment.

In the following description, the base station 20 can be read as a gateway. In addition, the base station 20 may be read as the relay station 30.

### <4-1. Initial connection process>

First, an initial connection process will be described.

The initial connection process is a process for transitioning the radio connected state of the terminal device 40 from the unconnected state to the connected state. The unconnected state is, for example, RRC_IDLE or RRC_INACTIVE. RRC_IDLE is an idle state in which the terminal device is not connected to any cell, and is also referred to as an Idle mode. In addition, RRC_INACTIVE is a radio connected state indicating an inactive state newly defined in the NR, and is also referred to as an inactive mode. In RRC_INACTIVE, RRC connection itself is not established between the terminal device 40 and the base station, but for some UE contexts, the terminal device 40 and the base station may keep holding each other. The terminal device 40 and the base station may use the held UE context to hold in order to speed up the transition of the terminal device 40 to the connected state again. Note that the unconnected state may include the lightning mode. Furthermore, the connected state is, for example, RRC_CONNECTED. RRC_CONNECTED is a connected state in which a terminal device establishes a connection with a specific cell (e.g., Primary Cell), and is also referred to as a CONNECTED mode.

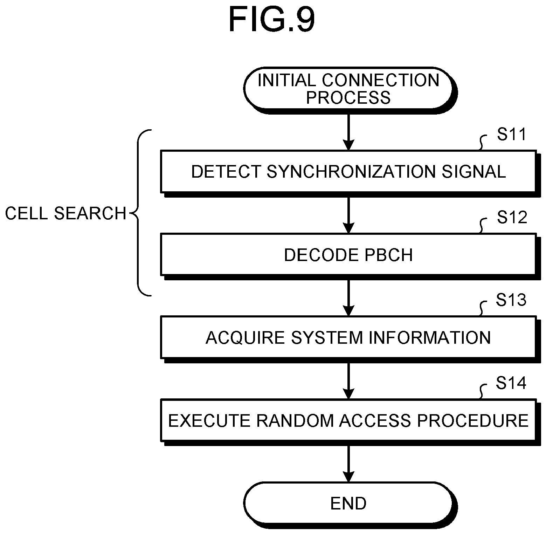

FIG. 9 is a flowchart illustrating an example of the initial connection process. The initial connection process will be described below with reference to FIG. 9. The initial connection process described below is executed, for example, when the terminal device 40 is powered on.

First, the terminal device 40 in the unconnected state performs cell search. The cell search is a procedure for user equipment (UE) to detect a physical cell ID (PCI) of a cell and obtain time and frequency synchronization. The cell search of the present embodiment includes steps of detecting a synchronization signal and decoding a physical broadcast channel (PBCH). The reception unit 432 of the terminal device 40 detects a cell synchronization signal (Step S11).

The reception unit 432 performs synchronization in the downlink with the cell based on the detected synchronization signal. Then, after the downlink synchronization is established, the reception unit 432 attempts to decode the PBCH and acquires a master information block (MIB) that is part of the system information (Step S12).

The system information is information for reporting a setting in a cell to which the system information is transmitted. The system information may be information common to all terminal devices (a terminal device 40) belonging to a cell. The system information may be information specific to the cell. The system information includes, for example, information about access to a cell, information about cell selection, information about other RATs and other systems, and the like. The system information includes an MIB and a system information block (SIB). The MIB is information necessary for receiving the SIB and the like, and is information about a fixed payload size broadcast by the PBCH. The MIB includes part of a system frame number, information about subcarrier intervals of at least the SIB1, the Msg. 2/4 for initial connection, paging, and broadcast SI messages, information about a subcarrier offset, information about a DMRS type A location, PDCCH setting for at least the SIB1, cell barred information, information about intra-frequency reselection, and the like. The SIB is system information other than the MIB and is broadcast by the PDSCH.

It should be noted that the system information can be classified into first system information, second system information, and third system information. The first system information and the second system information include information about access to a cell, information about acquisition of other system information, and information about cell selection. Information included in the MIB is the first system information. The information included in the SIB 1 in the SIB is the second system information (for example, remaining minimum SI). The remaining system information is the third system information (for example, other SI).

Also in the NR, system information is reported from the NR cell. The physical channel carrying the system information may be transmitted in a slot or a mini-slot. The mini-slot is defined by the number of symbols smaller than the number of symbols of the slot. Since the physical channel carrying the system information is transmitted in the mini-slot, the time required for the beam sweep is shortened, and the overhead can be reduced. For the NR, the first system information is transmitted by the NR-PBCH, and the second system information is transmitted by a physical channel different from the NR-PBCH.

The acquisition unit 431 of the terminal device 40 acquires the second system information based on the MIB (that is, the first system information) (Step S13). As described above, the second system information includes the SIB1 and the SIB2.

The SIB1 is access restriction information of a cell and scheduling information of system information other than the SIB1. In the case of NR, the SIB1 includes information related to cell selection (for example, cellSelectionInfo), information related to cell access (for example, cellAccessRelatedInfo), information related to connection establishment failure control (for example, connEstFailureControl), scheduling information of system information other than the SIB1 (for example, si-SchedulingInfo), setting of a serving cell, and the like. The setting of the serving cell includes a cell-specific parameter, and includes a downlink setting, an uplink setting, TDD setting information, and the like. The uplink setting includes an RACH setting and the like. Further, in the case of LTE, the SIB 1 includes access information about a cell, cell selection information, maximum uplink transmission power information, TDD setting information, a period of system information, mapping information of system information, a length of a system information (SI) window, and the like.

In the case of NR, the SIB 2 includes cell reselection information (for example, cellReselectionInfoCommon) and cell reselection serving frequency information (for example, cellReselectionServingFreqInfo). In the case of LTE, the SIB 2 includes connection prohibition information, radio resource setting information common to cells (radioResourceConfigCommon), uplink carrier information, and the like. The radio resource setting information common to cells includes setting information about a physical random access channel (PRACH) and a random access channel (RACH) common to cells.

Note that, in a case where the acquisition unit 431 has not been able to acquire the system information necessary for establishing the link, the control unit 43 of the terminal device 40 determines that access to the cell is prohibited. For example, in a case where the first system information cannot be acquired, the control unit 43 determines that access to the cell is prohibited. In this case, the control unit 43 ends the initial connection process.

In a case where the system information can be acquired, the control unit 43 executes a random access procedure based on the first system information and/or the second system information (Step S14). The random access procedure may be referred to as a random access channel procedure (RACH procedure) or an RA procedure. Upon completion of the random access procedure, the terminal device 40 transitions from the unconnected state to the connected state.

### <4-2. Random access procedure>

Next, a random access procedure will be described.

The random access procedure is performed for the purpose of an "RRC connection setup" from the idle state to the connected state (or the inactive state), a "request for state transition" from the inactive state to the connected state, and the like. The random access procedure is also used for the purpose of "scheduling request" for making a resource request for uplink data transmission and a "timing advance adjustment" for adjusting uplink synchronization. In addition, the random access procedure is performed in the case of an "on-demand SI request" for requesting system information that is not transmitted, a "beam recovery" for recovering interrupted beam connection, a "handover" for switching connected cells, and the like.

The "RRC connection setup" is an operation executed when the terminal device 40 is connected to the base station 20 according to generation of traffic or the like. Specifically, it is an operation of passing information (for example, UE context) about connection from the base station 20 to the terminal device 40. The UE context is managed by predetermined communication device identification information (for example, C-RNTI) instructed from the base station 20. When this operation is finished, the terminal device 40 transitions from the idle state to the inactive state or from the idle state to the connected state.

The "request for state transition" is an operation in which the terminal device 40 requests state transition from the inactive state to the connected state according to generation of traffic or the like. By transitioning to the connected state, the terminal device 40 can transmit and receive unicast data to and from the base station 20.

The "scheduling request" is an operation in which the terminal device 40 makes a resource request for uplink data transmission according to generation of traffic or the like. After normally receiving the scheduling request, the base station 20 allocate a resource of the PUSCH to the communication device. Note that the scheduling request is also performed by the PUCCH.

The "timing advance adjustment" is an operation for adjusting a frame error between downlink and uplink caused by a propagation delay. The terminal device 40 transmits a physical random access channel (PRACH) at a timing adjusted to the downlink frame. As a result, the base station 20 can recognize the propagation delay with the terminal device 40, and can instruct the value of the timing advance to the terminal device 40 by the message 2 or the like.

The "on-demand SI request" is an operation of requesting the base station 20 to transmit system information when the terminal device 40 needs the system information which is not transmitted for the purpose of overhead of the system information or the like.

The "beam recovery" is an operation of requesting return when communication quality is deteriorated due to movement of the terminal device 40 or interruption of a communication path by another object after the beam is established. Upon receiving this request, the base station 20 attempts connection to the terminal device 40 using different beams.

The "handover" is an operation of switching connection from a connected cell (serving cell) to a cell adjacent to the cell (neighbor cell) due to a change in a radio wave environment such as movement of the terminal device 40. The terminal device 40 that has received the handover command from the base station 20 makes a connection request to the neighbor cell designated by the handover command.

The random access procedure includes a contention-based random access procedure and a non-contention-based random access procedure. First, the contention-based random access procedure will be described.

Note that the random access procedure described below is a random access procedure assuming that the RAT supported by the communication system 1 is LTE. However, the random access procedure described below is also applicable to a case where the RAT supported by the communication system 1 is other than LTE.

### (Contention-based random access procedure)

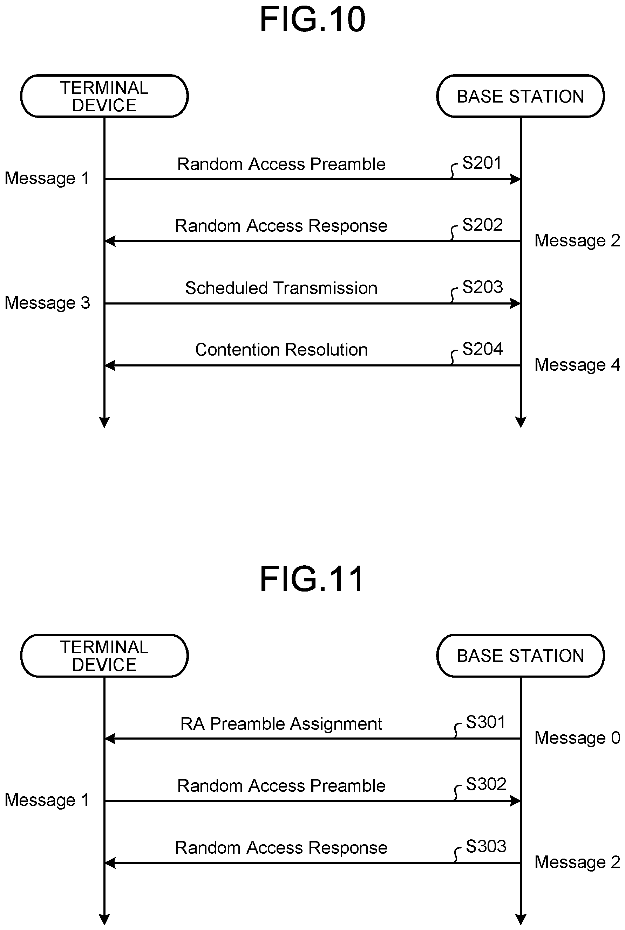

The contention-based random access procedure is a random access procedure performed on the initiative of the terminal device 40. FIG. 10 is a diagram illustrating a contention-based random access procedure. As illustrated in FIG. 10, the contention-based random access procedure is a four-step procedure starting from transmission of the random access preamble from the terminal device 40. The contention-based random access procedure includes the steps of transmitting a random access preamble (Message 1), receiving a random access response (Message 2), transmitting a message (Message 3), and receiving a message (Message 4) for contention resolution.

First, the terminal device 40 randomly selects a preamble sequence to be used from a plurality of predetermined preamble sequences. Then, the terminal device 40 transmits a message (Message 1: Random Access Preamble) including the selected preamble sequence to the connection destination base station 20 (Step S201). The random access preamble is transmitted by the PRACH.

When receiving the random access preamble, the control unit 23 of the base station 20 transmits a random access response (Message 2) to the random access preamble to the terminal device 40. This random access response is transmitted using, for example, the PDSCH. The terminal device 40 receives the random access response (Message 2) transmitted from the base station 20 (Step S202). The random access response includes one or a plurality of random access preambles that can be received by the base station 20 and a resource (hereinafter, referred to as an uplink grant) of an up link (UL) corresponding to the random access preamble. In addition, the random access response includes a temporary cell radio network temporary identifier (TC-RNTI) which is an identifier unique to the terminal device 40 temporarily assigned to the terminal device 40 by the base station 20.

Upon receiving the random access response from the base station 20, the terminal device 40 determines whether the random access preamble transmitted in Step S201 is included in the reception information. In a case where the random access preamble is included, the terminal device 40 extracts an uplink grant corresponding to the random access preamble transmitted in Step S201 from among the uplink grants included in the random access response. Then, the terminal device 40 transmits a UL message (Message 3: Scheduled Transmission) using the resource scheduled by the extracted uplink grant (Step S203). The transmission of the message (Message 3) is performed using the PUSCH. The message (Message 3) includes an RRC message for a radio resource control (RRC) connection request. Further, the message (Message 3) includes the identifier of the terminal device 40. The message (Message 3) may be described as "Msg3".

In the contention-based random access procedure, a random access preamble randomly selected by the terminal device 40 is used for the procedure. Therefore, there may be a case where the terminal device 40 transmits the random access preamble, and at the same time, another terminal device 40 transmits the same random access preamble to the base station 20. Therefore, by receiving the identifier transmitted by the terminal device 40 in Step S203, the control unit 23 of the base station 20 recognizes between which terminal devices a preamble contention has occurred and resolves the contention. The control unit 23 transmits the contention resolution (Message 4) to the terminal device 40 selected by the contention resolution. The contention resolution (Message 4) includes the identifier transmitted by the terminal device 40 in Step S203. Further, the contention resolution (Message 4) includes an RRC message of the RRC connection setup. The terminal device 40 receives the contention resolution message (Message 4) transmitted from the base station 20 (Step S204) .

The terminal device 40 compares the identifier transmitted in Step S203 with the identifier received in Step S204. When the identifiers do not match, the terminal device 40 performs the random access procedure again from Step S201. When the identifiers match, the terminal device 40 performs the RRC connection operation and transitions from the idle state (RRC_IDLE) to the connected state (RRC_CONNECTED). The terminal device 40 uses the TC-RNTI acquired in Step S202 as a cell radio network temporary identifier (C-RNTI) in subsequent communication. After transitioning to the connected state, the terminal device 40 transmits an RRC message indicating RRC connection setup completion to the base station 20. The RRC connection setup complete message is also referred to as a message 5. Through this series of operations, the terminal device 40 is connected to the base station 20.

Note that the contention-based random access procedure illustrated in FIG. 10 is a 4-step random access procedure (4-step RACH). However, the communication system 1 can support a two-step random access procedure (2-step RACH) as the contention-based random access procedure. For example, the terminal device 40 transmits the random access preamble and also transmits the message (Message 3) described in Step S203. Then, the control unit 23 of the base station 20 transmits a random access response (Message 2) and a contention resolution (Message 4) as the responses. Since the random access procedure is completed in two steps, the terminal device 40 can be quickly connected to the base station 20.

### (Non-contention-based random access procedure)

Next, the non-contention-based random access procedure will be described. The non-contention-based random access procedure is a random access procedure performed on the initiative of the base station. FIG. 11 is a diagram illustrating a non-contention-based random access procedure. The non-contention-based random access procedure is a three-step procedure starting from the transmission of the random access preamble assignment from the base station 20. The non-contention-based random access procedure includes steps of receiving a random access preamble assignment (Message 0), transmitting a random access preamble (Message 1), and receiving a random access response (Message 2).

In the contention-based random access procedure, the terminal device 40 randomly selects a preamble sequence. However, in the non-contention-based random access procedure, the base station 20 assigns an individual random access preamble to the terminal device 40. The terminal device 40 receives the random access preamble assignment (Message 0) from the base station 20 (Step S301) .

The terminal device 40 performs random access to the base station 20 by using the random access preamble assigned in Step S301. That is, the terminal device 40 transmits the assigned random access preamble (Message 1) to the base station 20 by the PRACH (Step S302).

The control unit 23 of the base station 20 receives the random access preamble (Message 1) from the terminal device 40. Then, the control unit 23 transmits a random access response (Message 2) to the random access preamble to the terminal device 40 (Step S303). The random access response includes, for example, information about the uplink grant corresponding to the received random access preamble. When receiving the random access response (Message 2), the terminal device 40 performs the RRC connection operation and transitions from the idle state (RRC_IDLE) to the connected state (RRC_CONNECTED).

As described above, in the non-contention-based random access procedure, since the base station 20 schedules the random access preamble, the collision of the preamble hardly occurs.

### (Details of random access procedure of NR)

The random access procedure assuming that the RAT supported by the communication system 1 is LTE is described above. Note that the above random access procedure is also applicable to an RAT other than LTE. Hereinafter, a random access procedure assuming that the RAT supported by the communication system 1 is NR will be described in detail. Note that, in the following description, four steps related to Message 1 to Message 4 illustrated in FIG. 10 or 11 will be described in detail. The step of Message 1 corresponds to Step S201 illustrated in FIG. 10 and Step S302 illustrated in FIG. 11. The step of Message 2 corresponds to Step S202 illustrated in FIG. 10 and Step S303 illustrated in FIG. 11. The step of Message 3 corresponds to Step S203 illustrated in FIG. 10. The step of Message 4 corresponds to Step S204 illustrated in FIG. 10.

### NR random access preamble (Message 1)

In NR, the PRACH is referred to as an NR physical random access channel (NR-PRACH). The NR-PRACH is configured using a Zadoff-Chu sequence. In the NR, a plurality of preamble formats is defined as a format of the NR-PRACH. The preamble format is defined by a combination of parameters such as a subcarrier interval, a transmission bandwidth, a sequence length, the number of symbols used for transmission, the number of transmission repetitions, a cyclic prefix (CP) length, a guard period, and the like of the PRACH. The type of the preamble sequence of the NR-PRACH is numbered. The number of the type of the preamble sequence is referred to as a preamble index.

In the NR, setting regarding the NR-PRACH is performed on the terminal device 40 in the idle state by the system information. Furthermore, setting regarding the NR-PRACH is performed on the terminal device 40 in the connected state by dedicated RRC signaling.

The terminal device 40 transmits the NR-PRACH using a physical resource (NR-PRACH occasion) that can be transmitted by the NR-PRACH. The physical resource is indicated by a setting related to the NR-PRACH. The terminal device 40 selects any of the physical resources to transmit the NR-PRACH. Further, when the terminal device 40 is in the connected state, the terminal device 40 transmits the NR-PRACH using the NR-PRACH resource. The NR-PRACH resource is a combination of an NR-PRACH preamble and the physical resource thereof. The base station 20 can instruct the NR-PRACH resource to the terminal device 40.

Note that the NR-PRACH is also transmitted when the random access procedure has failed. When retransmitting the NR-PRACH, the terminal device 40 waits for transmission of the NR-PRACH for a standby period calculated from a backoff value (back-off indicator, BI). Note that the backoff value may be different depending on the priority of the terminal category of the terminal device 40 and the generated traffic. At this time, notification of a plurality of back-off values is provided, and the terminal device 40 selects a back-off value to be used according to the priority. Furthermore, when retransmitting the NR-PRACH, the terminal device 40 increases the transmission power of the NR-PRACH compared to power for the first transmission. This procedure is referred to as power ramping.

### NR random access response (Message 2)

The NR random access response is transmitted using an NR physical downlink shared channel (NR-PDSCH). The NR-PDSCH including the random access response is scheduled by an NR physical downlink control channel (NR-PDCCH) in which a cyclic redundancy check (CRC) is scrambled by an RA-RNTI. The NR-PDCCH is transmitted by the control resource set (CORESET). The NR-PDCCH in which the CRC is scrambled by the RA-RNTI is disposed in a common search space (CSS) of a Type1-PDCCH CSS set. Note that the value of the random access radio network temporary identifier (RA-RNTI) is determined based on the transmission resource of the NR-PRACH corresponding to the random access response. The transmission resources of the NR-PRACH are, for example, a time resource (slot or subframe) and a frequency resource (resource block). Note that the NR-PDCCH may be disposed in a search space associated with the NR-PRACH linked with the random access response. Specifically, the search space in which the NR-PDCCH is disposed is set in association with the preamble of the NR-PRACH and/or the physical resource in which the NR-PRACH is transmitted. The search space in which the NR-PDCCH is disposed is set in association with the preamble index and/or the index of the physical resource. The NR-PDCCH is an NR synchronization signal (NR-SS) and a quasi co-location (QCL).

The NR random access response is medium access control (MAC) information. The NR random access response includes at least an uplink grant for transmitting the NR message 3, a value of a timing advance used to adjust uplink frame synchronization, and a value of a TC-RNTI. In addition, the NR random access response includes the PRACH index used for the NR-PRACH transmission corresponding to the random access response. In addition, the NR random access response includes information about backoff used to wait for transmission of the PRACH.

The control unit 23 of the base station 20 transmits the random access response by the NR-PDSCH. The terminal device 40 determines from the information included in the random access response whether the random access preamble has been successfully transmitted. In a case where it is determined that the random access preamble has been successfully transmitted, the terminal device 40 performs a transmission process of the NR message 3 (Message 3) according to the information included in the random access response. On the other hand, in a case where the transmission of the random access preamble has failed, the terminal device 40 determines that the random access procedure has failed, and performs the NR-PRACH retransmission process.

Note that the NR random access response may include a plurality of uplink grants for transmitting the NR message 3 (Message 3). The terminal device 40 can select one resource for transmitting the message 3 (Message 3) from a plurality of uplink grants. As a result, it is possible to alleviate the collision of the NR message 3 (Message 3) transmission in a case where the different terminal devices 40 receive the same NR random access response. As a result, the communication system 1 can provide a more stable random access procedure.

### NR message 3 (Message 3)

The message 3 (Message 3) of the NR is transmitted by an NR physical uplink shared channel (NR-PUSCH). The NR-PUSCH is transmitted by using the resource indicated by the random access response. The message 3 of NR includes an RRC connection request message. The format of the NR-PUSCH is indicated by a parameter included in the system information. For example, the parameter determines which one of orthogonal frequency division multiplexing (OFDM) and discrete Fourier transform spread OFDM (DFT-s-OFDM) is used as the format of the NR-PUSCH.

When the message 3 of the NR is normally received, the control unit 23 of the base station 20 advances the process to a transmission process of contention resolution (Message 4). On the other hand, in a case where the message 3 of the NR cannot be normally received, the control unit 23 attempts to receive the message 3 of the NR again for at least a predetermined period.

Another example of the instruction for retransmission of the message 3 and the transmission resource includes an instruction by the NR-PDCCH used for the instruction for retransmission of the message 3. The NR-PDCCH is an uplink grant. A resource for retransmission of the message 3 is indicated by downlink control information (DCI) of the NR-PDCCH. The terminal device 40 retransmits the message 3 based on the instruction of the uplink grant.

Note that, in a case where the reception of the contention resolution of the NR is not successful within the predetermined period, the terminal device 40 determines that the random access procedure has failed, and performs the retransmission process of the NR-PRACH. Note that the transmission beam of the terminal device 40 used for retransmission of the message 3 of the NR may be different from the transmission beam of the terminal device 40 used for the first transmission of the message 3. Note that, in a case where neither the NR contention resolution nor the message 3 retransmission instruction has been received within the predetermined period, the terminal device 40 determines that the random access procedure has failed, and performs the NR-PRACH retransmission process. The predetermined period is set by, for example, system information.

### NR contention resolution (Message 4)

The contention resolution of the NR is transmitted by using the NR-PDSCH. The NR-PDSCH including contention resolution is scheduled by the NR-PDCCH in which the CRC is scrambled by the TC-RNTI or the C-RNTI. The NR-PDCCH in which the CRC is scrambled by the TC-RNTI is disposed in the CSS of the Type1-PDCCH CSS set. Note that the NR-PDCCH may be disposed in a user equipment specific search space (USS). Note that the NR-PDCCH may be disposed in another CSS.

When normally receiving the NR-PDSCH including the contention resolution, the terminal device 40 transmits an acknowledgment (ACK) to the base station 20. Thereafter, the terminal device 40 determines that the random access procedure has succeeded, and shifts to the connected state (RRC_CONNECTED). On the other hand, in a case where a negative acknowledgment (NACK) to the NR-PDSCH is received from the terminal device 40 or in a case where there is no response, the control unit 23 of the base station 20 retransmits the NR-PDSCH including the contention resolution. In a case where the terminal device 40 cannot receive the contention resolution (Message 4) of the NR within the predetermined period, the terminal device determines that the random access procedure has failed, and performs the retransmission process of the random access preamble (Message 1).

### (2-STEP RACH of NR in the present embodiment)

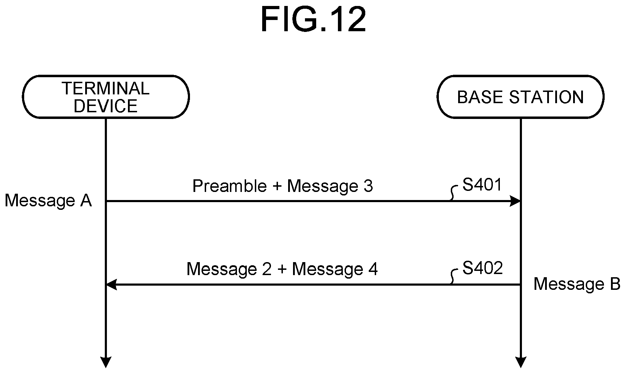

Next, an example of the 2-STEP RACH procedure (hereinafter, it is referred to as a 2-step random access procedure) of the NR will be described. FIG. 12 is a diagram illustrating a 2-step random access procedure. The 2-step random access procedure includes two steps of a message A (Step S401) and a message B (Step S402). As an example, the message A includes a message 1 (preamble) and a message 3 of the conventional 4-step random access procedure (4-STEP RACH procedure), and the message B includes a message 2 and a message 4 of the conventional 4-step random access procedure. Further, as an example, the message A includes a preamble (also referred to as PRACH) and a PUSCH, and the message B includes a PDSCH.

By adopting the two-step random access procedure, the random access procedure can be completed with a lower delay as compared with the conventional four-step random access procedure.

The preamble and the PUSCH included in the message A may be set in association with each transmission resource, or may be set by independent resources.

In a case where it is set in association with the transmission resource, for example, in a case where the transmission resource of the preamble is determined, the transmission resource of the PUSCH that can be unique or a plurality of candidates is determined. As an example, the time offset and the frequency offset between the preamble of the PRACH occasion and the PUSCH occasion are defined by one value. As another example, the time offset and the frequency offset between the preamble of the PRACH occasion and the PUSCH occasion are set to different values for each preamble. The value of the offset may be determined by a specification, or may be quasi-statically set by the base station 20. As an example of the values of the time offset and the frequency offset, for example, it is defined by a predetermined frequency. For example, in the unlicensed band (for example, 5 GHz band, band 45), the value of the time offset may be set to 0 or a value close to 0. Accordingly, listen before talk (LBT) can be omitted before transmission of the PUSCH.

On the other hand, when it is set by the independent resource, the respective transmission resources of the preamble and the PUSCH may be determined by the specification, or the resources may be quasi-statically set by the base station 20, or may be determined from another information. Examples of the other information include slot format information (for example, slot format indicator or the like), band width part (BWP) information, preamble transmission resource information, a slot index, and a resource block index. In addition, in a case where it is set by the independent resource, notification of the association between the preamble and the PUSCH constituting one message A may be provided to the base station by the UCI included in the payload of the PUSCH or the PUSCH, or may be provided to the base station by a transmission physical parameter (for example, the scrambling sequence of the PUSCH, the DMRS sequence and/or pattern, or the transmission antenna port of the PUSCH) of the PUSCH.

In addition, the method of setting the transmission resources of the preamble and the PUSCH may be switched between a case where it is set in association and a case where it is set by the independent resource. For example, in a license band, a case where it is set by the independent resource may be applied, and in an unlicensed band, a case where it is set in association with transmission resource may be applied.

### <<5. Signal process of the present embodiments

The basic operation of the communication system 1 is described above. Next, a signal process of the present embodiment will be described.

### <5-1. Outline of processing>

As described above, in the conventional signal processing scheme, the signal processing scheme corresponding to the channel is determined in advance. Therefore, the block configuration of the signal processing scheme does not change. Therefore, the signal process according to the situation cannot be performed.

However, in the present embodiment, the signal processing scheme is not uniquely determined, and the base station 20 and the terminal device 40 non-statically (for example, dynamically or quasi-statically) determine the signal processing scheme. For example, the base station 20 and the terminal device 40 determine an optimal signal processing scheme for each cell, for each beam, or for each terminal. Then, the base station 20 and the terminal device 40 perform a signal process based on the determined signal processing scheme.

Points of the present embodiment are as follows (P1) to (P10). The following points will be described in detail later.
(P1) The terminal device 40 regards the signal processing scheme implemented in the case of synchronizing the downlink as a statically determined scheme or a scheme associated with a feature of a synchronization signal.
(P2) After the downlink synchronization, the base station 20 and the terminal device 40 can change the signal processing scheme non-statically.
(P3) The terminal device 40 switches to the signal processing scheme for random access after the downlink synchronization.
(P4) The terminal device 40 notifies the base station 20 of capability information about switching of the signal processing scheme.
(P5) The base station 20 notifies the terminal device 40 of quasi-static control information related to signal processing scheme switching.
(P6) The terminal device 40 receives quasi-static control information related to the switching of the signal processing scheme from the base station 20.
(P7) The base station 20 updates the downlink and/or uplink signal processing scheme based on the reference signal and/or the channel state information transmitted from the terminal device 40.
(P8) The base station 20 dynamically or quasi-statically notifies the terminal device 40 of the optimum signal processing scheme for the determined terminal device 40.
(P9) The terminal device 40 performs a transmission process and a reception process based on the signal processing scheme notification of which is provided from the base station 20.
(P10) When the random access is required to be performed again, the terminal device 40 switches the signal processing scheme to the already-acquired signal processing scheme for random access, and performs the random access again.

### <5-2. Sequence example>

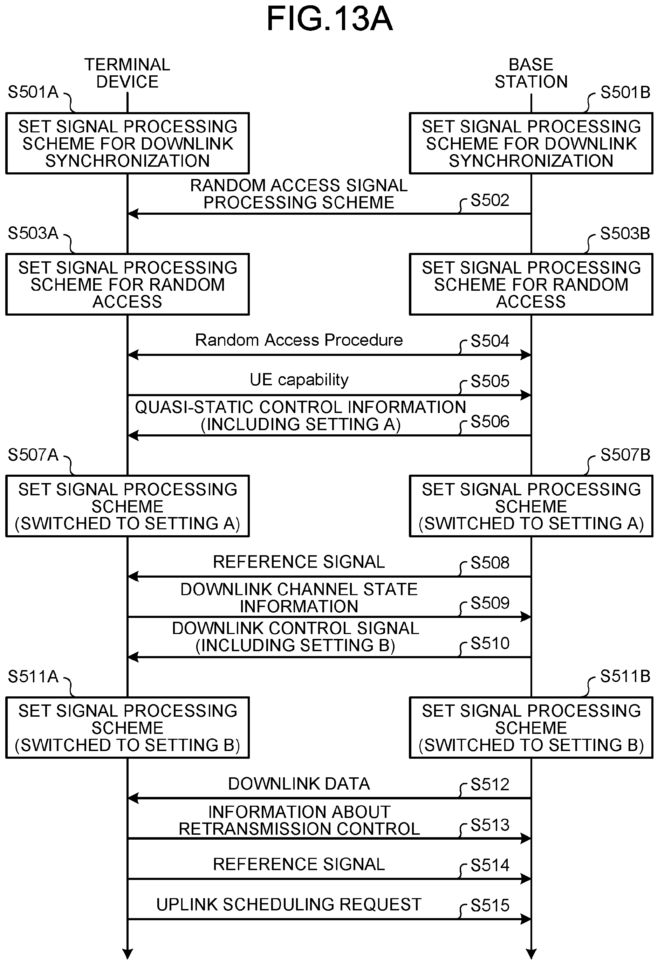

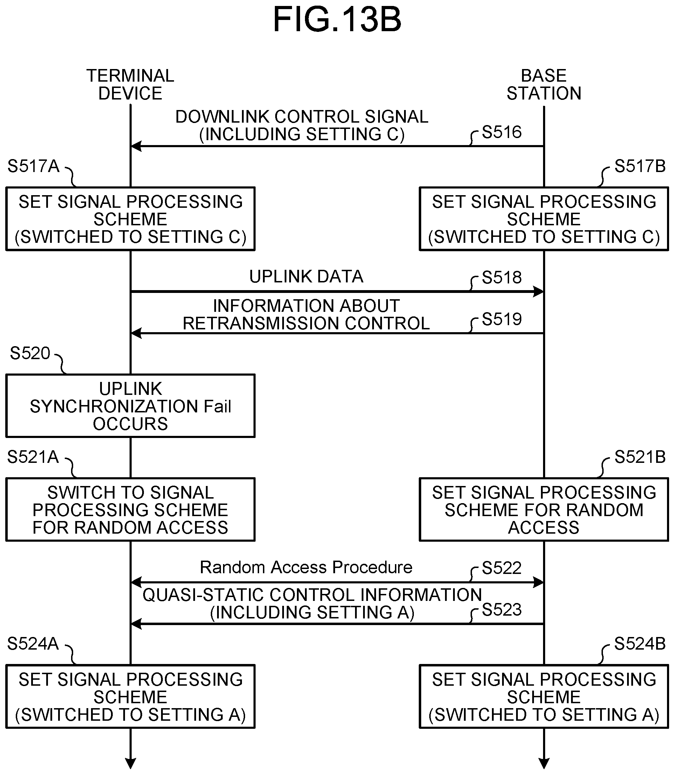

Although the outline of the signal process of the present embodiment is described above, an example of the signal process switching procedure of the present embodiment will be described before describing the details of the signal process of the present embodiment. FIGS. 13A and 13B are sequence examples of the signal process switching procedure of the present embodiment.

Each of the terminal device 40 and the base station 20 sets a signal processing scheme for downlink synchronization (Steps S501A and S501B). The downlink synchronization signal processing scheme may be a statically determined scheme as described in (P1) above or a non-statically (quasi-statically or dynamically) determined scheme. The non-statically determined signal processing scheme may be, for example, a scheme associated with the characteristics of the synchronization signal. The method is determined by the determination unit 235 of the base station 20 and the determination unit 435 of the terminal device 40.

When synchronization is established, the determination unit 235 of the base station 20 determines a signal processing scheme used for random access. The determination unit 235 may non-statically determine the signal processing scheme used for random access. Then, the transmission unit 433 of the base station 20 notifies the terminal device 40 of the information about the determined signal processing scheme (Step S502). Notification of the information about the determined signal processing scheme is provided to the terminal device 40 using, for example, system information included in the PBCH.

The reception unit 432 of the terminal device 40 acquires information about the signal processing scheme for random access from the base station 20. Then, the determination unit 435 of the terminal device 40 determines the signal processing scheme notification of which is provided from the base station 20 as a scheme to be used for the subsequent signal process. Then, the communication control unit 434 of the terminal device 40 and the communication control unit 234 of the base station 20 each set a signal processing scheme for random access (Steps S503A and S503B). Then, the communication control unit 434 of the terminal device 40 and the communication control unit 234 of the base station 20 perform a signal process in subsequent communication (for example, in the following Steps S504 to S506) based on the set signal processing scheme.

Subsequently, the terminal device 40 and the base station 20 execute a random access procedure (Step S504). When the random access procedure is completed, the transmission unit 433 of the terminal device 40 notifies the base station 20 of capability information (hereinafter, it is simply referred to as capability information) related to its own signal process (Step S505). The capability information includes, for example, information about a signal processing scheme that can be used by the terminal device 40.

The reception unit 332 of the base station 20 acquires the capability information from the terminal device 40. Then, the determination unit 235 of the base station 20 determines a signal processing scheme to be used for the subsequent signal process. At this time, the determination unit 235 of the base station 20 may determine the signal processing scheme based on the capability information acquired from the terminal device 40. In the following description, the signal processing scheme determined here is referred to as a setting A. Thereafter, the transmission unit 233 of the base station 20 transmits quasi-static control information to the terminal device (Step S506). The control information includes the setting A (information about the signal processing scheme determined by the base station 20).

The reception unit 432 of the terminal device 40 acquires the control information including the information about the setting A from the base station 20. Then, the determination unit 435 of the terminal device 40 determines the signal processing scheme based on the control information notification of which is provided from the base station 20. For example, the determination unit 435 determines the signal processing scheme identified in the setting A as a scheme to be used in the subsequent signal process. Then, the communication control unit 434 of the terminal device 40 and the communication control unit 234 of the base station 20 each set a signal processing scheme (Steps S507A and S507B). Then, the communication control unit 434 of the terminal device 40 and the communication control unit 234 of the base station 20 perform a signal process in subsequent communication (for example, in the following Steps S508 to S510) based on the set signal processing scheme (setting A).

Subsequently, the transmission unit 233 of the base station 20 transmits a reference signal (for example, CSI-RS) for downlink channel state estimation (Step S508). The reception unit 432 of the terminal device 40 receives the reference signal from the base station 20. The terminal device 40 generates downlink channel state information (for example, CQI, RI, PMI) based on the received reference signal. The transmission unit 433 of the terminal device 40 notifies the base station 20 of the generated downlink channel state information (Step S509).

The reception unit 332 of the base station 20 acquires downlink channel state information from the terminal device 40. Then, the determination unit 235 of the base station 20 determines a signal processing scheme to be used for the subsequent signal process. At this time, the determination unit 235 of the base station 20 may determine the signal processing scheme based on the downlink channel state information acquired from the terminal device 40. In the following description, the signal processing scheme determined here is referred to as a setting B. Thereafter, the transmission unit 233 of the base station 20 transmits a downlink control signal to the terminal device (Step S510). The control signal includes a notification of switching to the setting B (notification instructing switching to the signal processing scheme determined by the base station 20). Note that this notification may be, for example, a dynamic notification using DCI.

The reception unit 432 of the terminal device 40 receives a control signal including a notification of switching to the setting B from the base station 20. Then, the determination unit 435 of the terminal device 40 determines a signal processing scheme based on the control signal received from the base station 20. For example, when the control signal includes the notification of switching to the setting B, the determination unit 435 determines the signal processing scheme identified by the setting B as the scheme to be used in the subsequent signal process. Then, the communication control unit 434 of the terminal device 40 and the communication control unit 234 of the base station 20 each set a signal processing scheme (Steps S511A and S511B). Then, the communication control unit 434 of the terminal device 40 and the communication control unit 234 of the base station 20 perform a signal process in subsequent communication (for example, in the following Steps S512 to S516) based on the set signal processing scheme (setting B).

Subsequently, the transmission unit 233 of the base station 20 transmits downlink data (for example, PDSCH) to the terminal device 40 (Step S512). The reception unit 432 of the terminal device 40 receives the downlink data from the base station 20. Then, the transmission unit 433 of the terminal device 40 transmits information about retransmission control (for example, ACK/NACK) to the base station 20 (Step S513). Further, the transmission unit 433 of the terminal device 40 transmits a reference signal (for example, SRS) for uplink channel state estimation to the base station 20 (Step S514). Further, the transmission unit 433 of the terminal device 40 transmits an uplink scheduling request (for example, SR) to the base station 20 (Step S515).

The reception unit 332 of the base station 20 receives the downlink data, the reference signal, and the uplink scheduling request from the terminal device 40. Then, the determination unit 235 of the base station 20 determines a signal processing scheme to be used for the subsequent signal process. At this time, the determination unit 235 of the base station 20 may determine the signal processing scheme based on the reference signal acquired from the terminal device 40. In the following description, the signal processing scheme determined here is referred to as a setting C. Thereafter, the transmission unit 233 of the base station 20 transmits a downlink control signal to the terminal device (Step S516). The control signal includes a notification of switching to the setting C (notification instructing switching to the signal processing scheme determined by the base station 20). Note that this notification may be, for example, a dynamic notification using DCI.

The reception unit 432 of the terminal device 40 receives a control signal including a notification of switching to the setting C from the base station 20. Then, the determination unit 435 of the terminal device 40 determines a signal processing scheme based on the control signal received from the base station 20. For example, when the control signal includes the notification of switching to the setting C, the determination unit 435 determines the signal processing scheme identified by the setting C as the scheme to be used in the subsequent signal process. Then, the communication control unit 434 of the terminal device 40 and the communication control unit 234 of the base station 20 each set a signal processing scheme (Steps S517A and S517B). Then, the communication control unit 434 of the terminal device 40 and the communication control unit 234 of the base station 20 perform a signal process in subsequent communication (for example, in the following Steps S518 to S519) based on the set signal processing scheme (setting C).

Subsequently, the transmission unit 433 of the terminal device 40 transmits uplink data (for example, the PUSCH) to the base station 20 (Step S518). The reception unit 232 of the base station 20 receives the uplink data from the terminal device 40. Then, the transmission unit 233 of the base station 20 transmits information about retransmission control (for example, UL Grant, ACK/NACK) to the terminal device 40 (Step S519).

Here, it is assumed that an uplink synchronization Fail occurs in the terminal device 40 (Step S520). In this case, the terminal device 40 and the base station 20 restart from the random access. Specifically, the communication control unit 434 of the terminal device 40 and the communication control unit 234 of the base station 20 each set a signal processing scheme for random access (Steps S521A and S521B). The signal processing scheme set here may be the signal processing scheme set in Steps S503A and S503B, or may be the signal processing scheme notification of which is provided by the base station 20 to the surrounding terminal devices 40 by the system information.

Then, the terminal device 40 and the base station 20 execute a random access procedure based on the set signal processing scheme (Step S522). When the random access procedure is completed, the determination unit 235 of the base station 20 determines a signal processing scheme to be used for the subsequent signal process. Here, it is assumed that the setting A is determined as a signal processing scheme used for the subsequent signal process. Thereafter, the transmission unit 233 of the base station 20 transmits quasi-static control information to the terminal device (Step S523). The control information includes the setting A (information about the signal processing scheme determined by the base station 20).

The reception unit 432 of the terminal device 40 acquires the control information including the information about the setting A from the base station 20. Then, the determination unit 435 of the terminal device 40 determines the signal processing scheme based on the control information notification of which is provided from the base station 20. For example, the determination unit 435 determines the signal processing scheme identified in the setting A as a scheme to be used in the subsequent signal process. Then, the communication control unit 434 of the terminal device 40 and the communication control unit 234 of the base station 20 each set a signal processing scheme (Steps S524A and S524B). Then, the communication control unit 434 of the terminal device 40 and the communication control unit 234 of the base station 20 perform a signal process in subsequent communication based on the set signal processing scheme (setting A).

### <5-3. Signal processing scheme>

Although an example of the signal process switching procedure is described above, a signal processing scheme that can be used in the present embodiment will be described before describing the details of the signal process of the present embodiment. Note that the signal processing schemes described below are merely examples, and the signal processing schemes are not limited thereto.

### <5-3-1. Signal processing scheme example 1>

The signal processing scheme of the present embodiment may have a configuration in which a plurality of conventional signal processing blocks (also referred to as a functional block) is combined.

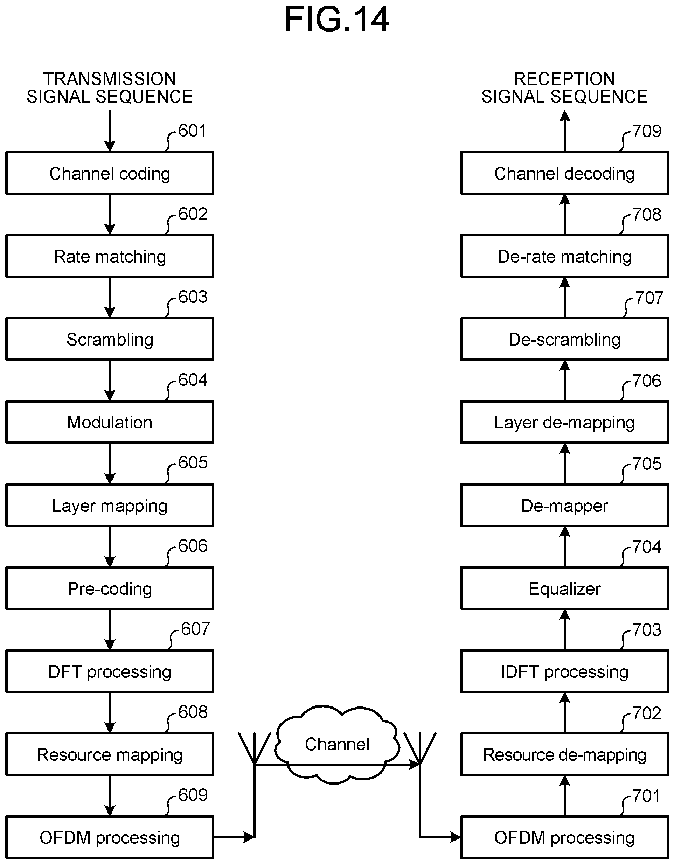

FIG. 14 is a diagram illustrating an example of a signal processing scheme. The signal processing scheme illustrated in FIG. 14 is a signal processing scheme equivalent to the conventional signal processing scheme illustrated in FIG. 1. In the case of the signal processing scheme illustrated in FIG. 14, a signal processing block denoted by reference numerals 601 to 609 is a signal processing block of the transmission side communication device, and a signal processing block denoted by reference numerals 701 to 711 is a signal processing block of the reception side communication device.

For example, when the terminal device 40 is a transmission side communication device and the base station 20 is a reception side communication device, a signal processing block denoted by reference numerals 601 to 609 is a functional block constituting the transmission processing unit 411 of the terminal device 40, and a signal processing block denoted by reference numerals 701 to 709 is a functional block constituting the reception processing unit 212 of the base station 20. On the other hand, when the base station 20 is a transmission side communication device and the terminal device 40 is a reception side communication device, a signal processing block denoted by reference numerals 601 to 609 is a functional block constituting the transmission processing unit 211 of the base station 20, and a signal processing block denoted by reference numerals 701 to 709 is a functional block constituting the reception processing unit 412 of the terminal device 40.

In the case of the signal processing scheme illustrated in FIG. 14, the transmission side communication device includes respective signal processing blocks of a channel coding block 601, a rate matching block 602, a scrambling block 603, a modulation block 604, a layer mapping block 605, a precoding block 606, a DFT processing block 607, a resource mapping block 608, and an OFDM processing block 609. Furthermore, in the case of the signal processing scheme illustrated in FIG. 14, the reception side communication device includes respective signal processing blocks of an OFDM processing block 701, a resource de-mapping block 702, an IDFT processing block 703, an equalizer block 704, a de-mapper block 705, a layer de-mapping block 706, a descrambling block 707, a de-rate matching block 708, and a channel decoding block 709.

### <5-3-2. Signal processing scheme example 2>

The signal processing scheme may have a configuration in which a conventional signal processing block configuration is simplified.

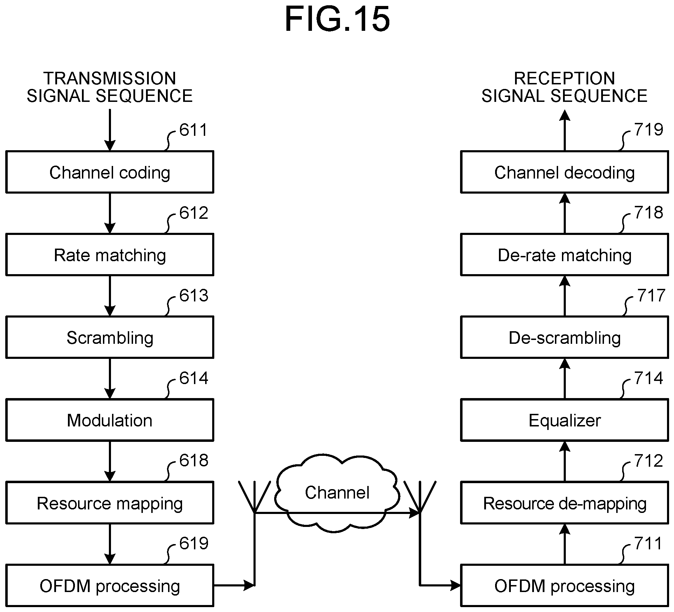

FIG. 15 is a diagram illustrating another example of the signal processing scheme. The signal processing scheme illustrated in FIG. 15 includes a plurality of signal processing blocks, but the signal processing block configuration is simplified, compared with that of configuration the signal processing scheme illustrated in FIG. 14. More specifically, the signal processing scheme illustrated in FIG. 15 is a signal processing scheme in which the multi-antenna transmission/reception process is simplified.

In the case of the signal processing scheme illustrated in FIG. 15, a signal processing block denoted by reference numerals 611 to 619 is a signal processing block of the transmission side communication device, and a signal processing block denoted by reference numerals 711 to 719 is a signal processing block of the reception side communication device.

In the case of the signal processing scheme illustrated in FIG. 15, the transmission side communication device includes respective signal processing blocks of a channel coding block 611, a rate matching block 612, a scrambling block 613, a modulation block 614, a resource mapping block 618, and an OFDM processing block 619. Furthermore, in the case of the signal processing scheme illustrated in FIG. 15, the reception side communication device includes respective signal processing blocks of an OFDM processing block 711, a resource de-mapping block 712, an equalizer block 714, a descrambling block 717, a de-rate matching block 718, and a channel decoding block 719.

The channel coding block 611, the rate matching block 612, the scrambling block 613, the modulation block 614, the resource mapping block 618, the OFDM processing block 619, the OFDM processing block 711, the resource de-mapping block 712, the equalizer block 714, the descrambling block 717, the de-rate matching block 718, and the channel decoding block 719 illustrated in FIG. 15 correspond to the channel coding block 601, the rate matching block 602, the scrambling block 603, the modulation block 604, the resource mapping block 608, the OFDM processing block 609, the OFDM processing block 701, the resource de-mapping block 702, the equalizer block 704, the descrambling block 707, the de-rate matching block 708, and the channel decoding block 709 illustrated in FIG. 14, respectively.

### <5-3-3. Signal processing scheme example 3>

The signal processing scheme may be one in which part of the signal processing block configuration is optimized by the user.

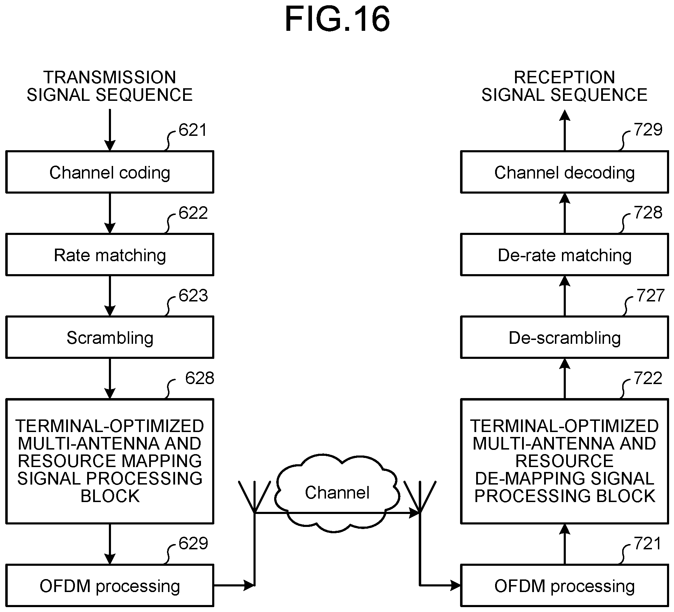

FIG. 16 is a diagram illustrating another example of the signal processing scheme. The signal processing scheme illustrated in FIG. 16 includes a plurality of signal processing blocks. In the signal processing scheme illustrated in FIG. 16, some signal processing blocks are user optimized. More specifically, the signal processing scheme illustrated in FIG. 16 is a signal processing scheme in which the multi-antenna process and the resource mapping process are user optimized.

In the case of the signal processing scheme illustrated in FIG. 16, a signal processing block denoted by reference numerals 621 to 629 is a signal processing block of the transmission side communication device, and a signal processing block denoted by reference numerals 721 to 729 is a signal processing block of the reception side communication device.

In the case of the signal processing scheme illustrated in FIG. 16, the transmission side communication device includes respective signal processing blocks of a channel coding block 621, a rate matching block 622, a scrambling block 623, a terminal-optimized signal processing block 628, and an OFDM processing block 629. In addition, in the case of the signal processing scheme illustrated in FIG. 16, the reception side communication device includes respective signal processing blocks of an OFDM processing block 721, a terminal-optimized signal processing block 722, a descrambling block 727, a de-rate matching block 728, and a channel decoding block 729.

The channel coding block 621, the rate matching block 622, the scrambling block 623, the OFDM processing block 629, the OFDM processing block 721, the descrambling block 727, the de-rate matching block 728, and the channel decoding block 729 illustrated in FIG. 16 correspond to the channel coding block 601, the rate matching block 602, the scrambling block 603, the OFDM processing block 609, the OFDM processing block 701, the descrambling block 707, the de-rate matching block 708, and the channel decoding block 709 illustrated in FIG. 14, respectively.

The terminal-optimized signal processing block 628 is a terminal-optimized multi-antenna and a resource mapping signal processing block. Further, the terminal-optimized signal processing block 722 is a terminal-optimized multi-antenna and a resource de-mapping signal processing block. Note that the terminal-optimized signal processing block may be replaced with a cell-optimized signal processing block or a beam-optimized signal processing block. In the following description, terminal-optimized will be described, but "terminal-optimized" may be replaced with "cell-optimized", "beam-optimized", or the like.

Here, the terminal-optimized signal processing block is, for example, a terminal-specific signal processing scheme in which the base station receives a reference signal for channel state estimation and channel state feedback information from the terminal, and the block is configured based on the received information.

Note that the terminal-optimized signal processing block may be configured by an arithmetic model obtained by machine learning, deep learning, or the like. At this time, the information used for learning may be, for example, a reference signal for measuring a channel state, channel state feedback information, positional information, capability information, channel type information, information about QoS, information about mobility (for example, UE mobility state), or the like. Note that the information used for learning is not limited thereto, and may be other information. The arithmetic model will be described in detail later.

### <5-3-4. Signal processing scheme example 4>

The signal processing scheme may be one in which part of the signal processing block configuration is optimized by the user.

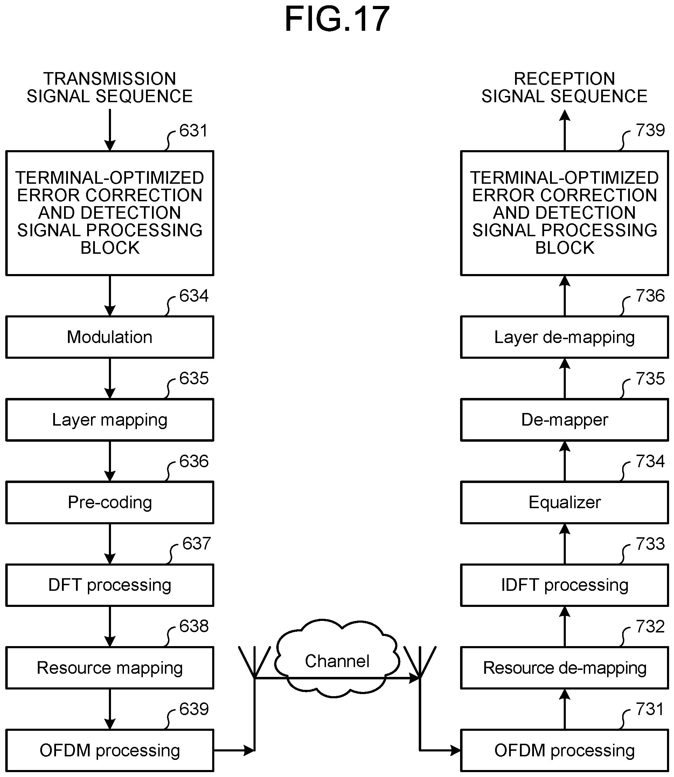

FIG. 17 is a diagram illustrating another example of the signal processing scheme. The signal processing scheme illustrated in FIG. 17 includes a plurality of signal processing blocks. In the signal processing scheme illustrated in FIG. 17, some signal processing blocks are user optimized. More specifically, the signal processing scheme illustrated in FIG. 17 is a signal processing scheme in which the error correction process and the error detection process are optimized by the user.

In the case of the signal processing scheme illustrated in FIG. 17, a signal processing block denoted by reference numerals 631 to 639 is a signal processing block of the transmission side communication device, and a signal processing block denoted by reference numerals 731 to 739 is a signal processing block of the reception side communication device.

In the case of the signal processing scheme illustrated in FIG. 17, the transmission side communication device includes respective signal processing blocks of a terminal-optimized signal processing block 631, a modulation block 634, a layer mapping block 635, a precoding block 636, a DFT processing block 637, a resource mapping block 638, and an OFDM processing block 639. Furthermore, in the case of the signal processing scheme illustrated in FIG. 16, the reception side communication device includes respective signal processing blocks of an OFDM processing block 731, a resource de-mapping block 732, an IDFT processing block 733, an equalizer block 734, a de-mapper block 735, a layer de-mapping block 736, and a terminal-optimized signal processing block 739.

The modulation block 634, the layer mapping block 635, the precoding block 636, the DFT processing block 637, the resource mapping block 638, the OFDM processing block 639, the OFDM processing block 731, the resource de-mapping block 732, the IDFT processing block 733, the equalizer block 734, the de-mapper block 735, and the layer de-mapping block 736 illustrated in FIG. 17 correspond to the modulation block 604, the layer mapping block 605, the precoding block 606, the DFT processing block 607, the resource mapping block 608, the OFDM processing block 609, the OFDM processing block 701, the resource de-mapping block 702, the IDFT processing block 703, the equalizer block 704, the de-mapper block 705, and the layer de-mapping block 706 illustrated in FIG. 14, respectively.

The terminal-optimized signal processing block 631 is a terminal-optimized error correction and an error detection signal processing block. Further, the terminal-optimized signal processing block 739 is a terminal-optimized error correction and an error detection signal processing block. Note that the terminal-optimized signal processing block may be a cell-optimized signal processing block or a beam-optimized signal processing block. "Terminal-optimized" appearing in the following description can be replaced with "cell optimization" or "beam optimization".

As described above, the terminal-optimized signal processing block is, for example, a terminal-specific signal processing scheme in which the base station receives a reference signal for channel state estimation and channel state feedback information from the terminal, and the block is configured based on the received information.

Note that the terminal-optimized signal processing block may be configured by an arithmetic model obtained by machine learning, deep learning, or the like. At this time, the information used for learning may be, for example, a reference signal for measuring a channel state, channel state feedback information, positional information, capability information, channel type information, information about QoS, information about mobility (for example, UE mobility state), or the like. Note that the information used for learning is not limited thereto, and may be other information. The arithmetic model will be described in detail later.

### <5-3-5. Signal processing scheme example 5>

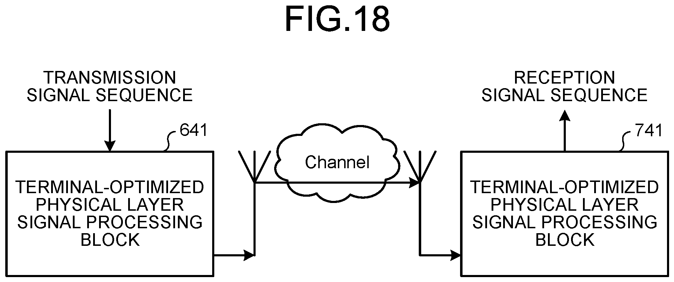

The signal processing scheme may not necessarily include a plurality of signal processing blocks. FIG. 18 is a diagram illustrating another example of the signal processing scheme. The signal processing scheme illustrated in FIG. 18 includes one signal processing block. The signal processing scheme illustrated in FIG. 18 includes one signal processing block 641 optimized by the user. The signal processing block 641 is a terminal-optimized physical layer signal processing block.

The one user-optimized signal processing block 641 is a terminal-optimized physical layer signal processing block. Note that the terminal-optimized signal processing block may be a cell-optimized signal processing block or a beam-optimized signal processing block. "Terminal-optimized" appearing in the following description can be replaced with "cell optimization" or "beam optimization".

As described above, the terminal-optimized signal processing block is, for example, a terminal-specific signal processing scheme in which the base station receives a reference signal for channel state estimation and channel state feedback information from the terminal, and the block is configured based on the received information.

Note that the terminal-optimized signal processing block may be configured by an arithmetic model obtained by machine learning, deep learning, or the like. At this time, the information used for learning may be, for example, a reference signal for measuring a channel state, channel state feedback information, positional information, capability information, channel type information, information about QoS, information about mobility (for example, UE mobility state), or the like. Note that the information used for learning is not limited thereto, and may be other information. The arithmetic model will be described in detail later.

### <5-3-6. Representation method of signal processing scheme>

The signal processing scheme can be expressed numerically. For example, a signal processing scheme equivalent to the conventional signal processing scheme can be set to a level 0, and a target signal processing schemes can be expressed for, for example, a level 1, a level 2,... with the signal processing scheme of the level 0 as a reference. This level may be assigned depending on the level of altitude, the degree of signaling overhead required, the degree of software configurability, and the like. The communication device can indicate the height of degree of adaptability to the signal processing scheme to another communication device by using the numerical information (for example, levels 0, 1, 2,...). For example, the terminal device 40 may express a signal processing scheme that can be supported by the terminal device 40 by the numerical information. Then, the terminal device 40 may indicate this numerical information to the base station 20 as its own capability information.

### <5-4. Arithmetic model>

The arithmetic model described above may be, for example, a neural network model obtained by machine learning or deep learning. This neural network model includes layers called an input layer, a hidden layer (alternatively, an intermediate layer), and an output layer, including a plurality of nodes, and the nodes are connected via edges. Each layer has a function called an activation function, and each edge is weighted. A neural network model based on deep learning includes a plurality of hidden layers.

The neural network model is, for example, a model in a form called a convolution neural network (CNN), a recurrent neural network (RNN), or a long short-term memory (LSTM) .

In the CNN, the hidden layer includes layers called a convolution layer and a pooling layer. In the convolution layer, filtering is performed by a convolution operation, and data called a feature map is extracted. In the pooling layer, information about the feature map output from the convolutional layer is compressed, and down-sampling is performed. The CNN is used, for example, for image recognition. Information about each pixel, which is also referred to as a pixel of an image, is input to an input layer, and information related to the image recognized as an output layer can be obtained.

The RNN has a network structure in which the value of the hidden layer is recursively input to the hidden layer, and for example, short-period time-series data is processed.

In the LSTM, the influence of the far past output can be held by introducing a parameter that holds the state of the intermediate layer called a memory cell for the intermediate layer output of the RNN. That is, in the LSTM, time-series data of a longer period is processed than that in the RNN.

The arithmetic model includes one or more CNNs, RNNs, and/or LSTMs, and is processed dependently or processed in parallel.

Note that the (R)AN 530 illustrated in FIG. 7 may provide parameters related to the arithmetic model via system information for each cell. Alternatively, the (R)AN 530 may provide parameters related to the arithmetic model via the RRC for each terminal device 40.

Here, the parameters related to the arithmetic model are the layer configuration of the input layer, the hidden layer (alternatively, the intermediate layer), and the output layer, the number of nodes constituting each layer, and the weight coefficient of the edge connecting each node. For example, the configuration of the arithmetic model may be defined in advance, and the weight coefficient of each edge may be provided as a variable. Furthermore, a configuration of a plurality of arithmetic models may be defined, and an ID for identifying the configuration of each arithmetic model may be assigned to provide the ID.

Note that the arithmetic model can be applied not only to the terminal-optimized signal processing scheme (signal processing block) but also to the cell-optimized signal processing scheme (signal processing block) and the beam-optimized signal processing scheme (signal processing block).

### <5-5. Details of signal process of the present embodiment>

Hereinafter, the signal process of the present embodiment will be described in detail. Hereinafter, description will be given along points P1 to P10 indicated by <5-1. Outline of processings

### <5-5-1. Point P1>

The terminal device 40 regards the signal processing scheme implemented in the case of synchronizing the downlink as a statically determined scheme or a scheme associated with a feature of a synchronization signal. The point P1 corresponds to, for example, Steps S501A, S501B, and S502 illustrated in FIG. 13A.

For example, as a first step of establishing a connection with the base station 20, the terminal device 40 receives a downlink synchronization signal, and synchronizes downlink reception timing (for example, synchronization signal reception) and acquires information about a cell (for example, reception of a master information block (MIB) and a system information block (SIB)).

Since the reception of the downlink synchronization signal and the acquisition of the information about the cell are performed as a first step in which the terminal device 40 is connected to the base station 20, the signal processing scheme performed at this time may be statically determined as one scheme.

Of course, the signal processing scheme performed at this time may be determined non-statically. For example, the base station 20 determines the signal processing scheme non-statically, and implicitly notifies the terminal device 40 of the determined signal processing scheme by using the downlink synchronization signal. For example, the base station 20 changes a transmission time, a frequency, or a sequence of the downlink synchronization signal according to the determined signal processing scheme. Then, the terminal device 40 determines a signal processing scheme to be used based on a reception time, a frequency, or a sequence of the downlink synchronization signal.

For example, when receiving the downlink synchronization signal at time T1, the terminal device 40 sets the signal processing scheme implemented in the reception of the information related to the cell to a setting C1, and when receiving the downlink synchronization signal at time T2, the terminal device 40 sets the signal processing scheme implemented in the reception of the information related to the cell to a setting C2.

In addition, for example, in a case where receiving the downlink synchronization signal at a frequency F1, the terminal device 40 sets the signal processing scheme implemented in the reception of the information about the cell to the setting C1, and in a case where receiving the downlink synchronization signal at a frequency F2, the terminal device 40 sets the signal processing scheme implemented in the reception of the information about the cell to the setting C2.

Further, for example, when the sequence of the downlink synchronization signal is a sequence Q1, the terminal device 40 sets the signal processing scheme implemented in the reception of the information related to the cell to the setting C1, and when the sequence of the downlink synchronization signal is the sequence Q1, the terminal device 40 sets the signal processing scheme implemented in the reception of the information related to the cell to the setting C2.

### <5-5-2. Point P2>

After the downlink synchronization, the base station 20 and the terminal device 40 can change the signal processing scheme non-statically. The point P2 corresponds to, for example, Steps S507A and S507B, Steps S511A and S511B, Steps S517A and S517B, and Steps S524A and S524B illustrated in FIGS. 13A and 13B.

For example, the terminal device 40 performs the transmission process and the reception process according to the signal processing scheme notification of which is provided from the base station after the downlink synchronization.

The physical channel to which the signal process is applied is, for example, a PDSCH, a PUSCH, a PSSCH, a PDCCH, a PUCCH, a PSCCH, a PBCH, a PRACH, or the like. In addition, the channel to which the present invention is applied may be, for example, a logical channel (BCCH, PCCH, CCCH, DCCH, DTCH) or a transport channel (BCH, DL-SCH, UL-SCH, PCH) in addition to the physical channel.

The terminal device 40 and the base station 20 may apply the same signal processing scheme to all channels, or may set a signal processing scheme unique to a channel. For example, the terminal device 40 and the base station 20 may make signal processing schemes for a data channel (for example, PDSCH, PUSCH, PSSCH) different from a control channel (for example, PDCCH, PUCCH, PSCCH).

Note that the base station 20 may manage a plurality of cells. For example, the base station 20 configures different cells for each frequency. Then, the base station 20 may non-statically determine a signal processing scheme in communication using a predetermined channel for each cell. Then, the base station 20 may execute communication using a predetermined channel for each cell based on the signal processing scheme determined for each cell. In addition, it may non-statically determine a signal processing scheme in communication using a predetermined channel for each BWP. Then, the base station 20 may execute communication using a predetermined channel for each BWP based on the signal processing scheme determined for each BWP.

Furthermore, the base station 20 may be configured to be beamformable. Then, the base station 20 may non-statically determine a signal processing scheme in communication using a predetermined channel for each beam. Then, the base station 20 may execute communication using a predetermined channel for each beam based on the signal processing scheme determined for each beam.

Furthermore, the base station 20 may non-statically determine a signal processing scheme in communication using a predetermined channel for each terminal device 40. Then, the base station 20 may execute communication using a predetermined channel for each terminal device 40 based on the signal processing scheme determined for each terminal device 40.

Furthermore, the base station 20 may provide a communication service corresponding to one or more network slices. Then, the base station 20 may non-statically determine a signal processing scheme in communication using a predetermined channel for each network slice. Then, the base station 20 may execute communication using a predetermined channel for each network slice based on the signal processing scheme determined for each network slice. Note that the network slice can be identified by single-network slice selection assistance information (S-NSSAI), and the S-NSSAI includes a set of a mandatory slice/service type (SST) consisting of 8 bits for identifying a slice type and an optional slice differentiator (SD) consisting of 24 bits for distinguishing different slices in the same SST. Here, 1: eMBB, 2: URLLC, 3: MIoT, and 4: V2X are defined as standardized values of the SST.

### <5-5-3. Point P3>

The terminal device 40 switches to the signal processing scheme for random access after the downlink synchronization. The point P3 corresponds to, for example, Steps S502, S503A, S503B, and S504 illustrated in FIG. 13A.

Note that the signal processing scheme used in the random access may be a scheme broadcast transmitted from the base station 20 by the MIB, the SIB, or the like. At this time, the signal processing scheme that the base station 20 makes notification of may be a scheme non-statically determined by the base station 20. In addition, the signal processing scheme used in the random access may be statically determined and statically stored in the terminal device 40 in advance.

When notification of the signal processing scheme used in the random access is provided by the MIB or the SIB, the base station 20 may notify the terminal device 40 of an index associated with a plurality of statically defined signal processing schemes.

### <5-5-4. Point P4>

The terminal device 40 notifies the base station 20 of capability information about switching of the signal processing scheme. The point P4 corresponds to, for example, Step S505 illustrated in FIG. 13A.

The capability information may include information about a signal processing scheme that can be processed by the terminal device 40. Alternatively, the capability information may include information about a signal processing scheme that the terminal device 40 cannot process.

Then, the base station 20 may determine the signal processing scheme based on the capability information notification of which is provided from the terminal device 40.

### <5-5-5. Point P5>

The base station 20 notifies the terminal device 40 of quasi-static control information related to signal processing scheme switching. The point P5 corresponds to, for example, Steps S506 and S523 illustrated in FIGS. 13A and 13B.

The base station 20 may notify the terminal device 40 of link information (hereinafter, simply referred to as link information) about the signal processing scheme and the index value. Here, the index value is a type of identification information for identifying the signal processing scheme. At this time, the link information may be, for example, information indicating that the signal processing scheme A is the index 1 and the signal processing scheme B is the index 2. Note that each signal processing scheme may be statically determined, or may be determined by a combination of the signal processing block and the function. For example, the signal processing scheme A is composed of the signal processing block indexes 1, 3, 2, and 5, and the signal processing scheme B is composed of the function indexes 2, 4, 1, and 5.

Furthermore, the base station 20 may notify the terminal device 40 of information about a line between a signal processing block constituting the signal processing scheme and an index value. Here, the index value is a type of identification information for identifying the signal processing block. At this time, the link information may be, for example, information indicating that the channel coding block is the index 1 and the rate matching block is the index 2.

Furthermore, the base station 20 may notify the terminal device 40 of information about a line between a function constituting a signal processing block and an index value. Here, the index value is a type of identification information for identifying a function. At this time, the link information may be, for example, information indicating that the function A is the index 1 and the function 2 is the index 2.

The base station 20 may notify the terminal device 40 of information about the arrangement order of the signal processing schemes. For example, the base station 20 may notify the terminal device 40 of index sequence information (for example, sequence information such as [3, 1, 2, 5, 4]). Then, the signal process may be executed in order from the signal processing scheme associated with the head of the base station 20 and the terminal device 40.

The base station 20 may notify the terminal device 40 of parameter information necessary for the determined signal processing scheme. Furthermore, the base station 20 may also notify the terminal device 40 of parameter information necessary for a signal processing block or a function.

The base station 20 and the terminal device 40 may have the unique the signal processing scheme in the uplink, the downlink, and the sidelink. For example, the base station 20 and the terminal device 40 may have different signal processing schemes in the uplink, the downlink, and the sidelink. The base station 20 and the terminal device 40 may have the same signal processing scheme in the uplink and the downlink signal, and may have different sidelink signal processing schemes in the uplink and the downlink signal. In addition, the base station 20 and the terminal device 40 may have the same signal processing scheme in all links. For example, the base station 20 and the terminal device 40 may have the same signal processing scheme in the uplink, the downlink, and the sidelink.

The quasi-static control information may include information about a signal processing scheme performed by the terminal device 40 and the base station 20 by default.

Notification of the quasi-static control information may be provided by the message 2, the message 4, or the message B of the random access.

### <5-5-6. Point P6>

The terminal device 40 receives quasi-static control information related to the switching of the signal processing scheme from the base station 20. The point P6 corresponds to, for example, Steps S506 and S523 illustrated in FIGS. 13A and 13B.

When receiving the quasi-static control information related to the switching of the signal processing scheme, the terminal device 40 may switch to the default signal processing scheme.

### <5-5-7. Point P7>

The base station 20 updates the downlink and/or uplink signal processing scheme based on the reference signal and/or the channel state information transmitted from the terminal device 40. The point P7 corresponds to, for example, Steps S508 to S510 and Steps S511A and S511B illustrated in FIG. 13A.

The base station 20 may determine an optimum signal processing scheme for the terminal device 40 based on the reference signal transmitted from the terminal device 40.

Furthermore, the base station 20 may determine an optimum signal processing scheme for the terminal device 40 based on the channel state information transmitted from the terminal device 40. The channel state information transmitted from the terminal device 40 may be information such as a conventional CQI, RI, and PMI. Furthermore, the terminal device 40 may newly make notification of information for signal process switching as the channel state information.

### <5-5-8. Point P8>

The base station 20 dynamically or quasi-statically notifies the terminal device 40 of the optimum signal processing scheme for the determined terminal device 40. The point P8 corresponds to, for example, Step S506, Step S510, and Step S516 illustrated in FIGS. 13A and 13B.

For example, the base station 20 may make notification of the signal processing scheme by the RRC signaling, the MAC CE, the DCI, or the like.

The base station 20 may make notification of an index associated with the signal processing scheme as the information about the signal processing scheme. Furthermore, the base station 20 may make notification of information about an index sequence composed of an index associated with a signal processing block or a function as the information about the signal processing scheme. The information about the index sequence is, for example, sequence information (for example, sequence information such as [3, 1, 2, 5, 4]) of identification information about a signal processing block or a function.

Furthermore, the base station 20 may make notification of parameter information necessary for the signal processing scheme, the signal processing block, or the function, in addition to the information about the signal processing scheme.

Note that, in a case where there is no dynamic notification regarding the signal processing scheme, the terminal device 40 may implement a default signal processing scheme. Furthermore, in a case where there is no dynamic notification regarding the signal processing scheme, the terminal device 40 may use the signal processing scheme used last time again.

### <5-5-9. Point P9>

The terminal device 40 performs transmission process and reception process based on the signal processing scheme notification of which is provided from the base station 20. The point P9 corresponds to, for example, Steps S504 to S506, Steps S508 to S510, Steps S512 to S516, and Steps S518 to S519 illustrated in FIGS. 13A and 13B.

### <5-5-10. Point P10>

When the random access is required to be performed again, the terminal device 40 switches the signal processing scheme to the already-acquired signal processing scheme for random access, and performs the random access again. The point P10 corresponds to, for example, Steps S520 to S522 illustrated in FIG. 13B.

For example, in a case where it is necessary to perform random access again such as uplink synchronization Fail or radio link failure, the terminal device 40 may switch the signal processing scheme to the already-acquired signal processing scheme for random access and perform random access again.

### <5-6. Application example>

In addition, application examples can be conceivable below.

### (First application example)

The communication device (base station 20, relay station 30, and terminal device 40) may use different signal processing schemes in the primary cell and the secondary cell. In addition, the communication device may use different signal processing schemes in the master cell and the secondary cell.

### (Second application example)

When the terminal-optimum signal processing scheme is used as the signal processing scheme, the information amount of the control information notification of which is provided from the base station 20 to the terminal device 40 may be smaller than the information amount of the conventional control information. For example, the base station 20 makes notification of only the resource allocation information in the DCI, and does not make notification of the other control information as being already applied to the terminal-optimal signal processing scheme. As the notification means, the following (1) and (2) are conceivable.

### (1) Notification means 1

The communication device makes notification of the control information in another control information format. For example, another DCI format is defined, and the base station 20 notifies the terminal device 40 of the control information. In addition, for example, another UCI format is defined, and the terminal device 40 notifies the base station 20 of the control information.

### (2) Notification means 2

The communication device uses an existing control information format to make notification of the control information with some data as a fixed value such as a zero value. For example, the control information notification of which is provided with a fixed value is a parameter already applied in the terminal-optimized signal processing scheme.

### (Third application example)

The communication device may non-statically determine a signal processing scheme to be used for communication with another communication device based on information about service quality required for communication with another communication device. The base station 20 may determine a signal processing scheme corresponding to QoS of a packet or a flow such as 5QI as a signal processing scheme used for communication with the terminal device 40. For example, in the case of communication that requires low delay or power saving, the base station 20 switches to a signal processing scheme with a small signal process amount. Furthermore, for example, in a case of communication that requires high speed communication or high reliability, the base station 20 switches to a signal processing scheme capable of adaptive modulation in units of subcarriers. Here, the communication device may non-statically determine a signal processing scheme to be used for communication with another communication device based on a network slice supporting communication with another communication device.

### (FOURTH Application Example)

The present embodiment is also applicable to sidelink communication.

For example, in the case of sidelink communication in which the base station 20 exists, the base station 20 notifies the terminal device 40 of the signal processing scheme. Then, the terminal device 40 non-statically determines the signal processing scheme used for the sidelink communication based on the information about the signal processing scheme received from the base station 20. Then, the terminal device 40 communicates with another terminal device 40 based on the determined signal processing scheme.

Furthermore, for example, in the case of sidelink communication in which the base station 20 does not exist, the transmission side terminal device 40 notifies the reception side terminal device 40 of the reception signal processing scheme by a control signal or the like. Then, the reception side terminal device 40 non-statically determines the signal processing scheme used for the sidelink communication based on the information about the signal processing scheme received from the transmission side terminal device 40. Then, the reception side terminal device 40 communicates with the transmission side terminal device 40 based on the determined signal processing scheme.

Furthermore, for example, in the case of sidelink communication in which the base station 20 does not exist and the group leader exists, the terminal device 40 serving as the group leader notifies the terminal device 40 serving as the slave of the signal processing scheme. Then, the terminal device 40 serving as the slave non-statically determines the signal processing scheme used for the sidelink communication based on the information about the signal processing scheme received from the terminal device 40 serving as the group leader. Then, the terminal device 40 serving as the slave communicates with the terminal device 40 serving as the group leader or the terminal device 40 serving as another slave based on the determined signal processing scheme. Here, the group leader may be referred to as a master. The slave may be described as a member.

### <<6. Modifications>>

The above-described embodiment illustrates an example, and various modifications and applications are possible.

For example, in the above-described embodiment, the base station 20 and the terminal device 40 determine the signal processing scheme used for communication, but the relay station 30 may determine the signal processing scheme. Then, the relay station 30 may communicate with the base station 20, the terminal device 40, or another relay station 30 based on the determined signal processing scheme.

Furthermore, a device different from the communication device (for example, the base station 20 and the terminal device 40) that performs a signal process may determine the signal processing scheme. For example, the management device 10 may determine a signal processing scheme used for communication with the base station 20 and the terminal device 40. Then, the management device 10 may notify the base station 20 and/or the terminal device 40 of the determined signal processing scheme. The base station 20 and/or the terminal device 40 may determine the signal processing scheme used for communication based on the information about the signal processing scheme notification of which is provided from the management device 10.

Furthermore, the management device 10 may store capability information about a signal processing scheme of the terminal device 40. At this time, the capability information may include information indicating whether the terminal device 40 can switch the signal processing scheme. Furthermore, the capability information may include information about a signal processing scheme that can be supported by the terminal device 40. Then, the management device 10 may notify the base station 20 of the capability information. The management device 10 may notify the terminal device 40 of the capability information. Then, the base station 20 may determine a signal processing scheme to be used in communication with the terminal device 40 based on the capability information received from the management device 10.

The control device that controls the management device 10, the base station 20, the relay station 30, and the terminal device 40 of the present embodiment may be realized by a dedicated computer system or a general-purpose computer system.

For example, a communication program for executing the above-described operation is stored and distributed in a computer-readable recording medium such as an optical disk, a semiconductor memory, a magnetic tape, or a flexible disk. Then, for example, the control device is configured by installing the program in a computer and executing the above-mentioned process. At this time, the control device may be a device (for example, a personal computer) outside the management device 10, the base station 20, the relay station 30, and the terminal device 40. Furthermore, the control device may be a device (for example, the control unit 13, the control unit 23, the control unit 33, and the control unit 43) inside the management device 10, the base station 20, the relay station 30, and the terminal device 40.

Further, the communication program may be stored in a disk device provided in a server device on a network such as the Internet so that it can be downloaded to a computer or the like. Further, the above-mentioned function may be realized by the operating system (OS) in conjunction with the application software. In this case, the part other than the OS may be stored in a medium and distributed, or the part other than the OS may be stored in the server device so that it can be downloaded to a computer or the like.

Further, in the above embodiment, it is also possible to manually perform all or part of the process described as being performed automatically of respective processes described, alternatively, it is also possible to automatically perform all or part of the process described as being performed manually by a known method. In addition, the processing procedure, specific name, and information including various pieces of data and parameters illustrated in the above document and drawings can be arbitrarily changed unless otherwise specified. For example, the various types of information illustrated in each figure are not limited to the illustrated information.

Further, each component of each of the illustrated devices is a functional concept, and does not necessarily have to be physically configured as illustrated in the figure. That is, the specific form of distribution/integration of each device is not limited to the one illustrated in the figure, and all or part of the device can be functionally or physically dispersed/integrated in any unit according to various loads and usage conditions. Note that this configuration by distribution and integration may be performed dynamically.

In addition, the above-described embodiments can be appropriately combined in a region in which the processing contents do not contradict each other. Furthermore, the order of each step illustrated in the flowchart of the above-described embodiment can be appropriately changed.

Furthermore, for example, the present embodiment can be implemented as any configuration constituting a device or a system, for example, a processor as a system large scale integration (LSI) or the like, a module using a plurality of processors or the like, a unit using a plurality of modules or the like, a set obtained by further adding other functions to a unit, or the like (that is, a configuration of part of the device).

Note that, in the present embodiment, the system means a set of a plurality of components (devices, modules (parts), etc.), and it does not matter whether all the components are in the same housing. Therefore, a plurality of devices housed in separate housings and connected via a network and one device in which a plurality of modules is housed in one housing are both systems.

Furthermore, for example, the present embodiment can adopt a configuration of cloud computing in which one function is shared and processed by a plurality of devices in cooperation via a network.

### <<7. Conclusion>>

As described above, according to an embodiment of the present disclosure, the base station 20 and the terminal device 40 non-statically determine a signal processing scheme selected from a plurality of signal processing schemes as a signal processing scheme in communication using a predetermined channel. For example, the base station 20 determines a signal processing scheme used for communication with the terminal device based on the reference signal transmitted by the terminal device 40, and notifies the terminal device 40 of the determined signal processing scheme. Then, the terminal device 40 non-statically determines the signal processing scheme based on the notification from the base station. Then, the base station 20 and the terminal device 40 control communication in a predetermined channel based on the determined signal processing scheme.

As a result, the base station 20 and the terminal device 40 can use an optimum signal processing scheme according to the situation. For example, the base station 20 and the terminal device 40 can use an optimal signal processing scheme that is cell-specific, beam-specific, network slice-specific, or terminal-specific. As a result, the base station 20 and the terminal device 40 can achieve high communication performance.

The embodiments of the present disclosure have been described above, the technical scope of the present disclosure is not limited to the above-described embodiments as they are, and various changes can be made without departing from the gist of the present disclosure. Moreover, the components over different embodiments and modifications may be suitably combined.

Further, the effects in each embodiment described in the present specification are merely examples and are not limited, and other effects may be present.

The present technology may also be configured as below.
(1) A communication device comprising:
   a determination unit that non-statically determines a signal processing scheme selected from a plurality of signal processing schemes having different signal processing block configurations as a signal processing scheme in communication using a predetermined channel; and
   a communication control unit that controls communication in the predetermined channel based on the determined signal processing scheme.
(2) The communication device according to (1), further comprising:
   a transmission unit that transmits information about a signal processing scheme determined by the determination unit to another communication device, wherein
   the communication control unit controls communication with the another communication device using the predetermined channel based on the signal processing scheme determined by the determination unit.
(3) The communication device according to (2), wherein
   the transmission unit dynamically or quasi-statically notifies the another communication device of information about a signal processing scheme determined by the determination unit.
(4) The communication device according to (2) or (3), wherein
   the transmission unit implicitly notifies the another communication device of information about a signal processing scheme determined by the determination unit by controlling at least one of a time, a frequency, and a sequence of a synchronization signal.
(5) The communication device according to (3) or (4), wherein
   the signal processing scheme determined by the determination unit includes a plurality of signal processing blocks, and
   the transmission unit dynamically or quasi-statically notifies the another communication device of sequence information of identification information associated with each of the plurality of signal processing blocks.
(6) The communication device according to any one of (3) to (5), wherein
   at least one signal processing block configuring the signal processing scheme determined by the determination unit includes a plurality of functions, and
   the transmission unit dynamically or quasi-statically notifies the another communication device of sequence information of identification information associated with each of the plurality of functions.
(7) The communication device according to any one of (2) to (6), wherein
   the determination unit non-statically determines a signal processing scheme to be used for a random access procedure from among a plurality of signal processing schemes having different signal processing block configurations,
   the transmission unit broadcast-transmits system information including information about a signal processing scheme determined by the determination unit, and
   the communication control unit performs a process of a random access procedure with the another communication device based on the determined signal processing scheme.
(8) The communication device according to any one of (2) to (7), further comprising:
   a reception unit that receives capability information about a signal processing scheme of the another communication device, wherein
   the determination unit non-statically determines a signal processing scheme to be used for communication with the another communication device based on the capability information, and
   the communication control unit controls communication with the another communication device using the predetermined channel based on a signal processing scheme determined by the determination unit.
(9) The communication device according to any one of (2) to (8), further comprising:
   a reception unit that receives a reference signal from the another communication device, wherein
   the determination unit non-statically determines a signal processing scheme to be used for communication with the another communication device based on information about the reference signal, and
   the communication control unit controls communication with the another communication device using the predetermined channel based on a signal processing scheme determined by the determination unit.
(10) The communication device according to any one of (2) to (9), comprising:
   a reception unit that receives channel state information related to a state of the predetermined channel, wherein
   the determination unit non-statically determines a signal processing scheme to be used for communication using the predetermined channel based on the channel state information, and
   the communication control unit controls communication with the another communication device using the predetermined channel based on a signal processing scheme determined by the determination unit.
(11) The communication device according to any one of (2) to (10), wherein
   the determination unit non-statically determines a signal processing scheme to be used for communication with the another communication device based on information about service quality required for communication with the another communication device, and
   the communication control unit controls communication with the another communication device using the predetermined channel based on a signal processing scheme determined by the determination unit.
(12) The communication device according to any one of (1) to (11), wherein
   the communication device manages a plurality of cells,
   the determination unit non-statically determines a signal processing scheme in communication using the predetermined channel for each of the cells, and
   the communication control unit controls communication using the predetermined channel for each cell based on the signal processing scheme determined for the each cell.
(13) The communication device according to any one of (1) to (12), wherein
   the communication device is configured to be beamformable,
   the determination unit non-statically determines a signal processing scheme in communication using the predetermined channel for each beam, and
   the communication control unit controls communication using the predetermined channel for each beam based on the signal processing scheme determined for the each beam.
(14) The communication device according to any one of (1) to (13), wherein
   the communication device is linked to a plurality of other communication devices,
   the determination unit non-statically determines a signal processing scheme in communication using the predetermined channel for each of the plurality of other communication devices, and
   the communication control unit controls communication using the predetermined channel for each of the plurality of other communication devices based on the signal processing scheme determined for each of the plurality of other communication devices.
(15) The communication device according to (1), further comprising:
   a reception unit that receives, from another communication device, information related to a signal processing scheme in communication using the predetermined channel, the signal processing scheme being selected from among a plurality of signal processing schemes having different signal processing block configurations, wherein
   the determination unit non-statically determines a signal processing scheme in communication using the predetermined channel based on the received information about the signal processing scheme, and
   the communication control unit controls communication with the another communication device using the predetermined channel based on a determined signal processing scheme.
(16) The communication device according to (15), wherein
   the reception unit receives information about the signal processing scheme, the information of which it being dynamically or quasi-statically notified from the another communication device, and
   the determination unit non-statically determines a signal processing scheme in communication using the predetermined channel based on the information about the signal processing scheme, the information of which it being notified dynamically or quasi-statically.
(17) The communication device according to (15) or (16), wherein
   the reception unit receives a synchronization signal in which the another communication device controls at least one of a time, a frequency, and a sequence based on information about the signal processing scheme, and
   the determination unit non-statically determines a signal processing scheme in communication using the predetermined channel based on the synchronization signal from the another communication device.
(18) The communication device according to any one of (15) to (17), wherein
   the determination unit non-statically determines a signal processing scheme to be used for a random access procedure from among a plurality of signal processing schemes having different signal processing block configurations,
   the reception unit receives system information broadcast-transmitted from the another communication device, the system information including information about a signal processing scheme to be used in a random access procedure, and
   the communication control unit performs random access to the another communication device based on a signal processing scheme identified by the system information.
(19) The communication device according to (1), wherein
   the communication device is a terminal device that is linked to a base station, and
   includes a reception unit that receives, from the base station, information related to a signal processing scheme in communication using a predetermined channel, the signal processing scheme being selected from among a plurality of signal processing schemes having different signal processing block configurations,
   the determination unit non-statically determines a signal processing scheme in communication using the predetermined channel based on the received information about the signal processing scheme, and
   the communication control unit controls communication with the base station using the predetermined channel based on the determined signal processing scheme.
(20) A communication method comprising:
   non-statically determining a signal processing scheme selected from among a plurality of signal processing schemes having different signal processing block configurations as a signal processing scheme in communication using a predetermined channel; and
   controlling communication in the predetermined channel based on the determined signal processing scheme.
(21) A management device including:
   a storage unit that stores capability information about a signal processing scheme of a terminal device that controls communication in a predetermined channel based on a signal processing scheme selected from a plurality of signal processing schemes having different signal processing block configurations and non-statically determined as a signal processing scheme in communication using the predetermined channel; and
   a communication unit that notifies a communication device of the capability information.
(22) The management device according to (21), in which
   the capability information includes information indicating whether the terminal device can switch a signal processing scheme.
(23) The management device according to (21) or (22), in which
   the capability information includes information about a signal processing scheme that can be supported by the terminal device.
(24) The management device according to any one of (21) to (23), in which
   the communication device which the communication unit notifies of the capability information is the terminal device or a base station to which the terminal device links.
(25) A management method including:
   a storage unit that stores capability information about a signal processing scheme of a terminal device that controls communication in a predetermined channel based on a signal processing scheme selected from a plurality of signal processing schemes having different signal processing block configurations and non-statically determined as a signal processing scheme in communication using the predetermined channel; and
   a communication unit that notifies a communication device of the capability information.

### Reference Signs List

- 1: COMMUNICATION SYSTEM
- 10: MANAGEMENT DEVICE
- 20: BASE STATION
- 30: RELAY STATION
- 40: TERMINAL DEVICE
- 11: COMMUNICATION UNIT
- 21, 31, 41: RADIO COMMUNICATION UNIT
- 12, 22, 32, 42: STORAGE UNIT
- 13, 23, 33, 43: CONTROL UNIT
- 211, 311, 411: TRANSMISSION PROCESSING UNIT
- 212, 312, 412: RECEPTION PROCESSING UNIT
- 213, 313, 413: ANTENNA
- 231, 331, 431: ACQUISITION UNIT
- 232, 332, 432: RECEPTION UNIT
- 233, 333, 433: TRANSMISSION UNIT
- 234, 334, 434: COMMUNICATION CONTROL UNIT
- 235, 335, 435: DETERMINATION UNIT

## Claims

1. A communication device comprising:
a determination unit that non-statically determines a signal processing scheme selected from a plurality of signal processing schemes having different signal processing block configurations as a signal processing scheme in communication using a predetermined channel; and
a communication control unit that controls communication in the predetermined channel based on the determined signal processing scheme.

2. The communication device according to claim 1, further comprising:
a transmission unit that transmits information about a signal processing scheme determined by the determination unit to another communication device, wherein
the communication control unit controls communication with the another communication device using the predetermined channel based on the signal processing scheme determined by the determination unit.

3. The communication device according to claim 2, wherein
the transmission unit dynamically or quasi-statically notifies the another communication device of information about a signal processing scheme determined by the determination unit.

4. The communication device according to claim 2, wherein
the transmission unit implicitly notifies the another communication device of information about a signal processing scheme determined by the determination unit by controlling at least one of a time, a frequency, and a sequence of a synchronization signal.

5. The communication device according to claim 3, wherein
the signal processing scheme determined by the determination unit includes a plurality of signal processing blocks, and
the transmission unit dynamically or quasi-statically notifies the another communication device of sequence information of identification information associated with each of the plurality of signal processing blocks.

6. The communication device according to claim 3, wherein
at least one signal processing block configuring the signal processing scheme determined by the determination unit includes a plurality of functions, and
the transmission unit dynamically or quasi-statically notifies the another communication device of sequence information of identification information associated with each of the plurality of functions.

7. The communication device according to claim 2, wherein
the determination unit non-statically determines a signal processing scheme to be used for a random access procedure from among a plurality of signal processing schemes having different signal processing block configurations,
the transmission unit broadcast-transmits system information including information about a signal processing scheme determined by the determination unit, and
the communication control unit performs a process of a random access procedure with the another communication device based on the determined signal processing scheme.

8. The communication device according to claim 2, further comprising:
a reception unit that receives capability information about a signal processing scheme of the another communication device, wherein
the determination unit non-statically determines a signal processing scheme to be used for communication with the another communication device based on the capability information, and
the communication control unit controls communication with the another communication device using the predetermined channel based on a signal processing scheme determined by the determination unit.

9. The communication device according to claim 2, further comprising:
a reception unit that receives a reference signal from the another communication device, wherein
the determination unit non-statically determines a signal processing scheme to be used for communication with the another communication device based on information about the reference signal, and
the communication control unit controls communication with the another communication device using the predetermined channel based on a signal processing scheme determined by the determination unit.

10. The communication device according to claim 2, comprising:
a reception unit that receives channel state information related to a state of the predetermined channel, wherein
the determination unit non-statically determines a signal processing scheme to be used for communication using the predetermined channel based on the channel state information, and
the communication control unit controls communication with the another communication device using the predetermined channel based on a signal processing scheme determined by the determination unit.

11. The communication device according to claim 2, wherein
the determination unit non-statically determines a signal processing scheme to be used for communication with the another communication device based on information about service quality required for communication with the another communication device, and
the communication control unit controls communication with the another communication device using the predetermined channel based on a signal processing scheme determined by the determination unit.

12. The communication device according to claim 1, wherein
the communication device manages a plurality of cells,
the determination unit non-statically determines a signal processing scheme in communication using the predetermined channel for each of the cells, and
the communication control unit controls communication using the predetermined channel for each cell based on the signal processing scheme determined for the each cell.

13. The communication device according to claim 1, wherein
the communication device is configured to be beamformable,
the determination unit non-statically determines a signal processing scheme in communication using the predetermined channel for each beam, and
the communication control unit controls communication using the predetermined channel for each beam based on the signal processing scheme determined for the each beam.

14. The communication device according to claim 1, wherein
the communication device is linked to a plurality of other communication devices,
the determination unit non-statically determines a signal processing scheme in communication using the predetermined channel for each of the plurality of other communication devices, and
the communication control unit controls communication using the predetermined channel for each of the plurality of other communication devices based on the signal processing scheme determined for each of the plurality of other communication devices.

15. The communication device according to claim 1, further comprising:
a reception unit that receives, from another communication device, information related to a signal processing scheme in communication using the predetermined channel, the signal processing scheme being selected from among a plurality of signal processing schemes having different signal processing block configurations, wherein
the determination unit non-statically determines a signal processing scheme in communication using the predetermined channel based on the received information about the signal processing scheme, and
the communication control unit controls communication with the another communication device using the predetermined channel based on a determined signal processing scheme.

16. The communication device according to claim 15, wherein
the reception unit receives information about the signal processing scheme, the information of which it being dynamically or quasi-statically notified from the another communication device, and
the determination unit non-statically determines a signal processing scheme in communication using the predetermined channel based on the information about the signal processing scheme, the information of which it being notified dynamically or quasi-statically.

17. The communication device according to claim 15, wherein
the reception unit receives a synchronization signal in which the another communication device controls at least one of a time, a frequency, and a sequence based on information about the signal processing scheme, and
the determination unit non-statically determines a signal processing scheme in communication using the predetermined channel based on the synchronization signal from the another communication device.

18. The communication device according to claim 15, wherein
the determination unit non-statically determines a signal processing scheme to be used for a random access procedure from among a plurality of signal processing schemes having different signal processing block configurations,
the reception unit receives system information broadcast-transmitted from the another communication device, the system information including information about a signal processing scheme to be used in a random access procedure, and
the communication control unit performs random access to the another communication device based on a signal processing scheme identified by the system information.

19. The communication device according to claim 1, wherein
the communication device is a terminal device that is linked to a base station, and
includes a reception unit that receives, from the base station, information related to a signal processing scheme in communication using a predetermined channel, the signal processing scheme being selected from among a plurality of signal processing schemes having different signal processing block configurations,
the determination unit non-statically determines a signal processing scheme in communication using the predetermined channel based on the received information about the signal processing scheme, and
the communication control unit controls communication with the base station using the predetermined channel based on the determined signal processing scheme.

20. A communication method comprising:
non-statically determining a signal processing scheme selected from among a plurality of signal processing schemes having different signal processing block configurations as a signal processing scheme in communication using a predetermined channel; and
controlling communication in the predetermined channel based on the determined signal processing scheme.
